(19) Europäisches Patentamt
European Patent Office
Office européen des brevets

(11) Veröffentlichungsnummer: **0 136 976**
**A2**

(12) # EUROPÄISCHE PATENTANMELDUNG

(21) Anmeldenummer: **84810408.9**

(22) Anmeldetag: **20.08.84**

(51) Int. Cl.⁴: **A 01 N 43/54**

(30) Priorität: **23.08.83 CH 4614/83**

(43) Veröffentlichungstag der Anmeldung:
**10.04.85 Patentblatt 85/15**

(84) Benannte Vertragsstaaten:
**BE CH DE FR GB IT LI NL**

(71) Anmelder: **CIBA-GEIGY AG**
**Postfach**
**CH-4002 Basel(CH)**

(72) Erfinder: **Seiler, Alfred, Dr.**
**Schulstrasse 14**
**CH-4332 Stein(CH)**

(72) Erfinder: **Müller, Urs, Dr.**
**Drosselstrasse 6**
**CH-4142 Münchenstein(CH)**

(54) **Verwendung von Phenylpyrimidinen als Pflanzenregulatoren.**

(57) Phenylpyrimidine der unten definierten Formel I eignen sich zur Regulierung des Pflanzenwuchses. Sie können für verschiedene Zwecke verwendet werden wie z.B. Massnahmen die mit der Ertragssteigerung von Nutzpflanzen, Ernteerleichterung und Arbeitseinsparung ferner Erhöhung der Knick- und Wetterfestigkeit der Pflanzen im Zusammenhang stehen. Die Phenylpyrimidine entsprechen der Formel I

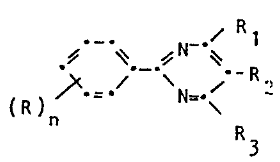

(I),

worin R Wasserstoff, Halogen, Nitro Cyan gegebenenfalls substituiertes Alkyl, Hydroxy gegebenenfalls substituiertes Alkoxy, gegebenenfalls substituiertes Alkenyl, Alkinyl, Alkenyloxy, Alkinyloxy, Sulfhydryl, Alkylthio, Carboxy, Alkylcarbonyl, Alkoxycarbonyl, Alkylcarbonyl, Alkylcarbonyloxy, Alkylaminocarbonyl, Amino, Alkylamino, Acetylamino, Ureido, Sulfonyl, Alkylsulfonyl, Sulfamoyl, Alkylsulfamoyl oder Alkoxyphosphonylmethyl

$R_1$ und $R_3$ unabhängig voneinander je Wasserstoff, Halogen, Alkyl, Cyan, Hydroxy, Alkoxy, Alkoxyalkoxy, Alkoxycarbonyloxy, Amino, Alkylamino, Morpholino oder Sulfhydryl und

$R_2$ Wasserstoff, Halogen, Alkyl, Halogenalkyl oder Phenyl bedeuten.

0136976

CIBA-GEIGY AG
Basel (Schweiz)

5-14556/=

Verwendung von Phenylpyrimidinen als Pflanzenregulatoren

Die vorliegende Erfindung betrifft ein Verfahren zur Regulierung des Pflanzenwachstums mittels Phenylpyrimidinen sowie die Verwendung dieser Substanzen zur Steuerung physiologischer Vorgänge im Pflanzenmetabolismus.

Die Phenylpyrimidine entsprechen der Formel I

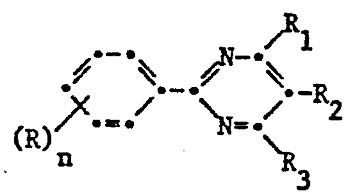 (I),

worin

n eine Zahl von 1 bis 5,

R Wasserstoff, Halogen, Nitro, Cyan, $-XR_5$, $-NR_6R_7$, -CO-A, $-CS-NR_6R_7$, $-SO_2-NR_6R_7$, $C(OR_4)_2-R_4$, 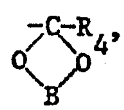, $-PO(OR_4)_2$, $-SO_3H$, $-N=CR_8R_9$, eine unsubstituierte oder durch Halogen, $-XR_5$, $-NR_6R_7$. $-PO(OR_4)_2$, -CO-A oder Cyan substituierte $C_1-C_6$-Alkyl- oder $C_3-C_6$-Cycloalkylgruppe oder eine unsubstituierte oder durch Halogen oder $-XR_4$ substituierte $C_2-C_6$-Alkenyl-, $C_3-C_6$-Cycloalkyl- oder $C_3-C_6$-Alkinylgruppe,

$R_1$ und $R_3$ unabhängig voneinander je Wasserstoff, Halogen, $C_1-C_6$-Alkyl, Cyan, -CO-A, $-NR_6R_7$, $-XR_5$ oder unsubstituiertes oder durch Halogen, $C_1-C_4$-Alkyl, Nitro oder $-XR_5$ substituiertes Phenyl,

$R_2$ Wasserstoff, Halogen, unsubstituiertes oder durch Halogen, $C_1-C_4$-Alkyl, Trifluormethyl, Nitro oder $-XR_5$ substituiertes Phenyl oder

eine unsubstituierte oder durch Halogen oder $-XR_5$ substituierte $C_1$-$C_6$-Alkyl-, $C_3$-$C_6$-Cycloalkyl-, $C_2$-$C_6$-Alkenyl- oder $C_2$-$C_6$-Alkinylgruppe,

$R_4$ Wasserstoff, eine unsubstituierte oder durch Halogen, -CO-A, Hydroxy, $C_1$-$C_6$-Alkoxy oder $-NR_6R_7$ substituierte $C_1$-$C_6$-Alkyl- oder $C_3$-$C_6$-Alkenyl- oder $C_2$-$C_6$-Alkinylgruppe,

$R_5$ dasselbe wie $R_4$, ausserdem $C_1$-$C_6$-Alkylcarbonyl, $C_3$-$C_6$-Alkenylcarbonyl, $C_3$-$C_6$-Alkinylcarbonyl,

$R_6$ und $R_7$ unabhängig voneinander je Wasserstoff, $C_2$-$C_6$-Alkenyl, $C_2$-$C_6$-Alkinyl oder unsubstituiertes oder durch -CO-A substituiertes $C_1$-$C_6$ Alkyl, oder einer der Reste $R_6$ und $R_7$ bedeutet eine Gruppe -COA oder $-OR_4$ oder

$R_6$ und $R_7$ zusammen eine 4- bis 6-gliedrige Alkylenkette, die durch Sauerstoff, Schwefel, eine Imino- oder $C_1$-$C_4$-Alkylaminogruppe unterbrochen sein kann,

B eine verzweigte oder unverzweigte $C_1$-$C_6$-Alkylenkette und

X Sauerstoff, Schwefel, -SO- oder $-SO_2-$ bedeuten,

A die gleiche Bedeutung wie $R_4$ hat oder für $-OR_4$ oder $-NR_6R_7$ steht,

$R_8$ unsubstituiertes oder durch $C_1$-$C_6$-Alkoxy substituiertes Alkyl,

$R_9$ Wasserstoff oder dasselbe wie $R_8$ oder

$R_8$ und $R_9$ zusammen eine 4-5-gliedrige Alkylenkette bedeuten.

Solche Phenylpyrimidine und ihre Verwendung zur Antagonisierung der phytotoxischen Wirkung von Herbiziden auf Kulturpflanzen sind in der EP-A-55 693 beschrieben worden.

Es wurde nun überraschend gefunden, dass die Wirkstoffe der Formel I bzw. Mittel, die diese Wirkstoffe enthalten, sich vor allem dadurch auszeichnen, dass sie gezielt in den Metabolismus der Pflanzen eingreifen. Dieser gezielte Eingriff in die physiologischen Vorgänge der Pflanzenentwicklung macht die Wirkstoffe der Formel I für verschiedene Zwecke verwendbar, insbesondere für solche, die

mit der Ertragssteigerung bei Nutzpflanzen, der Ernteerleichterung und der Arbeitseinsparung bei Massnahmen an Pflanzenkulturen im Zusammenhang stehen.

Für die Wirkungsweise von Pflanzenwachstumsregulatoren gilt nach der bisherigen Erfahrung, dass ein Wirkstoff eine oder auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium des Samens oder der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in gewünschter Weise positiv beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn dadurch kann z.B. die Häufigkeit der Grasschnitte in Ziergärten, Park- und Sportanlagen oder an Strassenrändern reduziert werden. Von Bedeutung ist auch die Hemmung des Wuchses von krautigen und holzigen Pflanzen an Strassenrändern und in der Nähe von Ueberlandleitungen oder ganz allgemein in Bereichen, in denen ein starker Bewuchs unerwünscht ist.

Wichtig ist auch die Anwendung von Wachstumsregulatoren zur Hemmung des Längenwachstums bei Getreide, denn durch eine Halmverkürzung wird die Gefahr des Umknickens ("Lagerns") der Pflanzen vor der Ernte verringert oder vollkommen beseitigt. Ausserdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so dass ein Mehrertrag, bezogen auf die Bodenfläche, erzielt werden kann.

Ein weiterer Mechanismus der Ertragssteigerung mit Wachstumshemmern beruht darauf, dass die Nährstoffe in stärkerem Masse der Blüten- und Fruchtbildung zugute kommen, während das vegetative Wachstum eingeschränkt wird.

Mit Wachstumsregulatoren lässt sich häufig auch eine Förderung des vegetativen Wachstums erzielen. Dies ist von grossem Nutzen, wenn die vegetativen Pflanzenteile geerntet werden. Eine Förderung des vegetativen Wachstums kann aber auch gleichzeitig zu einer Förderung des generativen Wachstums führen, so dass z.B. mehr oder grössere Früchte zur Ausbildung kommen.

Ertragssteigerungen können in manchen Fällen auch durch einen Eingriff in den pflanzlichen Stoffwechsel, wie z.B. durch Erhöhung der Photosyntheseleistung, erreicht werden, ohne dass sich Aenderungen des vegetativen Wachstums bemerkbar machen. Wachstumsregulatoren können ferner eine Veränderung der Zusammensetzung der Pflanzen bewirken, so dass eine bessere Qualität der Ernteprodukte herbeigeführt wird. So ist es beispielsweise möglich, den Gehalt an Zucker in Zuckerrüben, Zuckerrohr, Ananas sowie Zitrusfrüchten zu erhöhen oder den Proteingehalt in Soja oder Getreide zu steigern.

Unter dem Einfluss von Wachstumsregulatoren kann es zur Ausbildung parthenokarper Früchte kommen. Ferner kann das Geschlecht der Blüten beeinflusst werden.

Mit Wachstumsregulatoren lässt sich auch die Produktion oder der Abfluss von sekundären Pflanzenstoffen positiv beeinflussen. Als Beispiel sei die Stimulierung des Latexflusses bei Gummibäumen genannt.

Während des Wachstums der Pflanze kann durch Einsatz von Wachstumsregulatoren auch die seitliche Verzweigung durch eine chemische Brechung der Apikaldominanz vermehrt werden. Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Durch Einsatz von Wachstumsregulatoren lässt sich der vorzeitige Fruchtfall verhindern. Es ist jedoch auch möglich, den Fruchtfall, - zum Beispiel bei Obst -, im Sinne einer chemischen Ausdünnung bis zu einem bestimmten Ausmass zu fördern. Wachstumsregulatoren können auch dazu dienen, um bei Kulturpflanzen zum Zeitpunkt der Ernte die zum Ablösen der Früchte erforderliche Kraft zu vermindern, so dass eine mechanische Beerntung der Pflanzen ermöglicht, beziehungsweise eine manuelle Beerntung erleichtert wird.

Mit Wachstumsregulatoren lässt sich ferner eine Beschleunigung oder auch eine Verzögerung der Reife des Erntegutes vor oder nach der Ernte erreichen. Dieses ist von besonderem Vorteil, weil sich dadurch eine optimale Anpassung an die Bedürfnisse des Marktes herbeiführen lässt. Weiterhin können Wachstumsregulatoren in manchen Fällen die Fruchtausfärbung verbessern. Darüberhinaus kann mit Hilfe von Wachstumsregulatoren auch eine zeitliche Konzentrierung der Reife erzielt werden. Damit werden Voraussetzungen dafür geschaffen, dass z.B. bei Tabak, Tomaten oder Kaffee, eine vollständige mechanische oder manuelle Beerntung in nur einem Arbeitsgang vorgenommen werden kann.

Durch die Anwendung von Wachstumsregulatoren kann auch die Samen- oder Knospenruhe der Pflanzen, also die endogene Jahresrhythmik, beeinflusst werden, so dass die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregulatoren kann auch erreicht werden, dass der Austrieb von Knospen oder die Keimung von Samen verzögert wird, z.B. um in frostgefährdeten Gebieten eine Schädigung durch Spätfröste zu vermeiden. Andererseits gelingt es, das Wurzelwachstum zu und/oder die Ausbildung von Sprösslingen zu stimulieren, so dass das Wachstum auf eine kürzere Zeitdauer beschränkt werden kann.

Ferner kann ein grösseres, besser ausgebildetes und tieferes Wurzelwerk eine verbesserte Stressüberwindung (bei Kälte und Trockenheit), eine bessere Ausnützung der Bodennährstoffe, und eine verstärkte Konkurrenzkraft gegenüber den Unkräutern bewirken und so zur Ertragssteigerung führen.

Mit Wachstumsregulatoren kann auch die Samenkeimung unter suboptimalen Bedingungen (z.B. Kälte) gefördert werden. Dies ermöglicht eine frühere Aussaat der Kultur, eine bessere Etablierung unter suboptimalen Bedingungen und kann so zur Ertragssteigerung beitragen.

Wachstumsregulatoren können auch eine Halophilie bei den Kulturpflanzen erzeugen. Damit werden die Voraussetzungen dafür geschaffen, dass eine Kultivierung von Pflanzen auf salzhaltigen Böden durchgeführt werden kann.

Mit Wachstumsregulatoren kann auch eine Frost- und Trockenresistenz bei Pflanzen induziert werden.

Unter dem Einfluss von Wachstumsregulatoren kann das Altern (die Seneszenz) von Pflanzen oder Pflanzenteilen gehemmt respektive verzögert werden. Eine solche Wirkung kann von hohem wirtschaftlichem

Interesse sein, dadurch, dass bei behandelten Pflanzenteilen oder ganzen Pflanzen wie Obst, Beeren, Gemüse, Salat oder Zierpflanzen deren Lagerfähigkeit nach der Ernte verbessert oder verlängert werden kann. Ebenso kann durch Behandlung von Kulturpflanzen über eine Verlängerung der Phase photosynthetischer Aktivität eine beachtliche Ertragssteigerung erzielt werden.

Ein weiteres wichtiges Anwendungsgebiet für Wuchshemmer ist deren Einsatz zur Hemmung eines übermässigen Wachstums bei tropischen Bodenbeckungspflanzen, den sogenannten Cover crops. In tropischen und subtropischen Monokulturen, wie z.B. in Palmplantagen, Baumwoll-, Maisfeldern usw. werden neben den eigentlichen Kulturpflanzen oftmals Bodenbedeckungspflanzen, insbesondere Leguminosenarten angepflanzt, die zur Erhaltung oder Steigerung der Bodenqualität (Verhinderung der Austrocknung, Versorgung mit Stickstoff) und zur Verhinderung von Erosion (Abtragung durch Wind und Wasser) dienen. Durch Applikation der erfindungsgemässen Wirkstoffe kann nunmehr das Wachstum dieser Cover crops kontrolliert und somit die Wuchshöhe dieser Bodenbedeckungspflanzen auf einem niedrigen Niveau gehalten werden, so dass ein gesundes Gedeihen der Kulturpflanzen und die Aufrechterhaltung einer günstigen Bodenbeschaffenheit gewährleistet ist.

Die pflanzenregulatorische Wirkung liegt schwerpunksmässig bei der Stimmulierung des Wurzelwachstums und der Keimförderung.

Ein verbessertes Wurzelwerk kann zur Ueberwindung von Stressbedingungen, wie Trockenheit, beitragen. Ferner kann dadurch eine bessere Nährstoffaufnahme erwartet werden. In diesem Sinne ist hervorzuheben, dass eine Beeinflussung des Wurzelwertes im positiven Sinne zur Ertragssicherung und Ertragssteigerung beitragen kann.

Die Keimförderung mittels diesen Substanzen unter Stressbedingungen wie Nässe, Kälte usw, kann von Wichtigkeit sein für ein regelmässiges

Aufl aufen des Saatgutes unabhängig von Stressfaktoren, kann früheres Aussäen ermöglichen und dadurch eventuell das Ausreifen gewährleisten (Verlängerung der Vegetationszeit), ferner kann dadurch in klimatologischen Randzonen möglicherweise die Kulturfläche ausgedehnt werden. In diesem Sinne ist auch die Keimförderung mittels Chemikalien als ein Mittel zur Ertragssicherung einerseits und andererseits zur Ertragssteigerung zu betrachten.

Besondere Bedeutung haben zur Beeinflussung des Pflanzenmetabolismus diejenigen Phenylpyrimidinen der Formel I erlangt, worin

n eine Zahl von 1 bis 3,

R Wasserstoff, Halogen, Nitro, Cyan, $C_1$-$C_4$-Alkyl, $C_1$-$C_4$-Halogenalkyl, $C_1$-$C_4$-Cyanoalkyl, Hydroxyl, $(C_1$-$C_4$-Alkoxy$)_n$, $C_1$-$C_4$-Halogenalkoxy, $C_2$-$C_8$-Halogenalkoxyalkyl, $C_2$-$C_4$-Alkenyl, $C_2$-$C_4$-Halogenalkenyl, $C_2$-$C_4$-Alkenyloxy, $C_2$-$C_4$-Alkinyl, Sulfhydryl, $C_1$-$C_4$-Alkylthio, Carboxyl, $C_1$-$C_4$-Alkylcarbonyl, $C_1$-$C_4$-Alkoxycarbonyl, $C_2$-$C_4$-Alkenylcarbonyl, $C_2$-$C_4$-Alkinylcarbonyl, $C_1$-$C_4$-Alkylcarbonyl-$C_1$-$C_4$-alkyl, $C_1$-$C_4$-Alkylcarbonyloxy, $C_1$-$C_4$-Alkylaminocarbonyl, $C_1$-$C_4$-Dialkylaminocarbonyl, Amino, $C_1$-$C_4$-Alkylamino, $C_1$-$C_4$-Dialkylamino, Acetylamino, Chloracetylamino, Methylureido, Dimethylureido, Sulfonyl, $C_1$-$C_4$-Alkylsulfonyl, Sulfamoyl, $C_1$-$C_4$-Alkylsulfamoyl, $C_1$-$C_4$-Dialkylsulfamoyl, $C_1$-$C_4$-Alkoxycarbonylsulfamoyl, $C_1$-$C_4$-Dialkoxyphosphonylmethyl

$R_1$ und $R_3$ unabhängig voneinander je Wasserstoff, Halogen, $C_1$-$C_6$-Alkyl, Cyan, Hydroxy, $C_1$-$C_6$-Alkoxy, $C_2$-$C_8$-Alkoxyalkyl, Phenyl, Phenoxy, $C_1$-$C_4$-Alkoxycarbonyloxy, Amino, $C_1$-$C_4$-Alkylamino, $C_1$-$C_4$-Dialkylamino, Morpholino, Sulfhydryl und

$R_3$ Wasserstoff, Halogen, $C_1$-$C_6$-Alkyl, $C_1$-$C_6$-Halogenalkyl oder Phenyl bedeuten.

Als besonders geeignete Wuchsregulatoren haben sich die 2-Phenylpyrimidine der Formel Ia erwiesen, worin

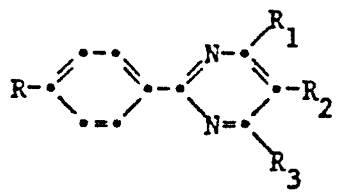

(Ia)

worin R Wasserstoff oder Methyl

$R_1$ Wasserstoff, Halogen, $C_1$-$C_6$-Alkyl, Hydroxy, $C_1$-$C_6$-Alkoxy, $C_2$-$C_8$-Alkoxyalkyl, Phenyl, Phenoxy, $C_1$-$C_4$-Alkoxycarbonyloxy, Amino, $C_1$-$C_4$-Alkylamino, $C_1$-$C_4$-Dialkylamino, Morpholino oder Sulfhydryl,

$R_2$ Wasserstoff, Halogen, $C_1$-$C_6$-Alkyl oder Phenyl,

$R_3$ Halogen, Hydroxy, $C_1$-$C_6$-Alkoxy, $C_2$-$C_8$-Alkoxyalkyl, Phenoxy oder Sulfhydryl bedeuten.

Ebenfalls ausgezeichnete Pflanzenwuchsregulatoren sind die 2-Phenylpyrimidine der Formel Ib

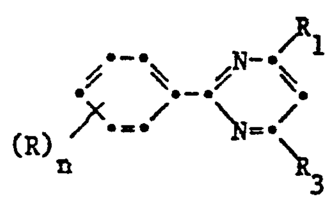

(Ib)

worin n, R, $R_1$ und $R_3$ die oben gegebene Bedeutung haben.

Als Einzelverbindungen sind aufgefallen:

2-Phenyl-4,6-dichlorpyrimidin.

2-(4-Methoxycarbonylamidophenyl)-4,6-dichlorpyrimidin.

Die Phenylpyrimidine der Formel I können durch bekannte Synthesewege hergestellt werden. Der 2-Phenylpyrimidinring wird z.B. durch Kondensation eines Phenylamidins mit einem Malonsäurederivat hergestellt.

Solche 2-Phenylpyrimidine werden beispielsweise dadurch erhalten, dass man in alkoholisch-basischer Lösung ein Phenylamidin mit einem Malonsäuredialkylester kondensiert

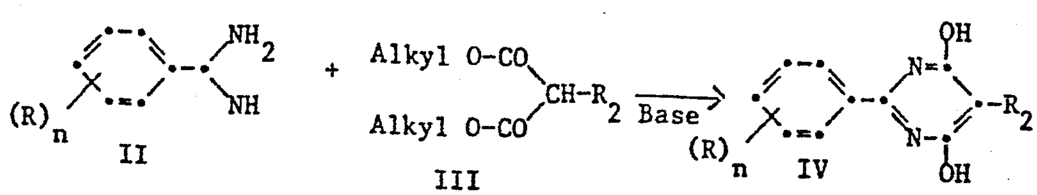


und dann gewünschtenfalls am erhaltenen 2-Phenyl-4,6-dihydroxy-pyrimidin der Formel IV die Hydroxylgruppen mittels Halogenierungsmitteln (Phosphoroxychlorid, Phosphoroxybromid, Sulfurylchlorid, Bromsuccinimid etc.) durch Halogenatome und auch diese gewünschtenfalls durch weitere Reste $R_1$ und $R_3$ ersetzt.

Falls $R_2$ Wasserstoff bedeutet, kann dieses ersetzt werden z.B. durch Einwirkenlassen von Chlor oder Brom in einem polaren Lösungsmittel wie z.B. Eisessig.

Die Halogenatome in den Positionen 4, 5 und 6 des Pyrimidinringes wiederum lassen sich ihrerseits in bekannter Weise durch Alkohole, Merkaptane oder Amine ersetzen.

Siehe dazu. z.B. J. Chem. Soc. 1965, S. 5467-5473,
J.prakt. Chem. 312 (1970), S. 494-506.
J.chem. Soc. Perkin Trans 1 1977, S. 2285-6.

Phenylpyrimidine, in denen $R_1$ einen Alkyl- oder Phenylrest bedeuten soll, werden beispielsweise durch Kondensation eines Phenylamidins mit einem Alkylester einer Acetessigsäure erhalten.

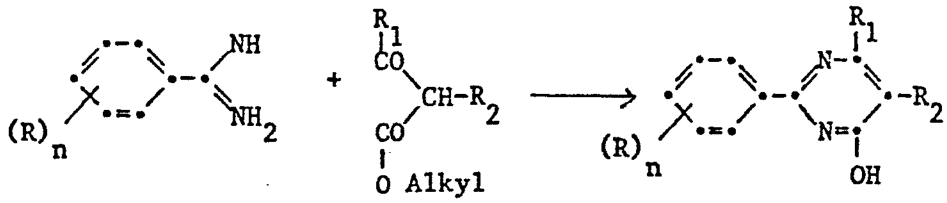

Auch hier kann die -OH Gruppe dann in bekannter Weise durch ein Halogenatom und dieses weiter durch einen Alkohol, Thiol oder ein Amin ersetzt werden.

Ferner gelingt es z.B. auch 2-Phenyl-4,6-dichlorpyrimidin und 2-Phenyl-4-chlor-6-hydroxypyrimidine herzustellen durch Umsetzung von Chlorbenzyliden-carbamoyl-chloride mit einem aliphatischen Nitril in Gegenwart von Chlorwasserstoff

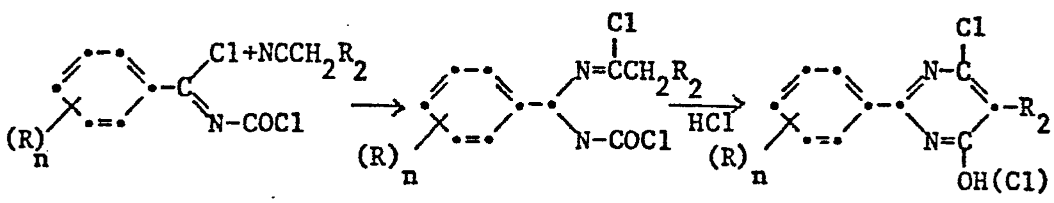


Siehe dazu Bull. Soc. Chem. Japan 44 (1971), S. 2182-2185.
2-Phenyl-4,6-dichlorpyrimidin lässt sich beispielsweise gemäss Ang. Chemie 89 (1977), S. 816-817 beispielsweise durch Kondensation von einem N-Phenylcyanamid und einem N,N-Dialkylamid in $POCl_3$ bei 100° erhalten.

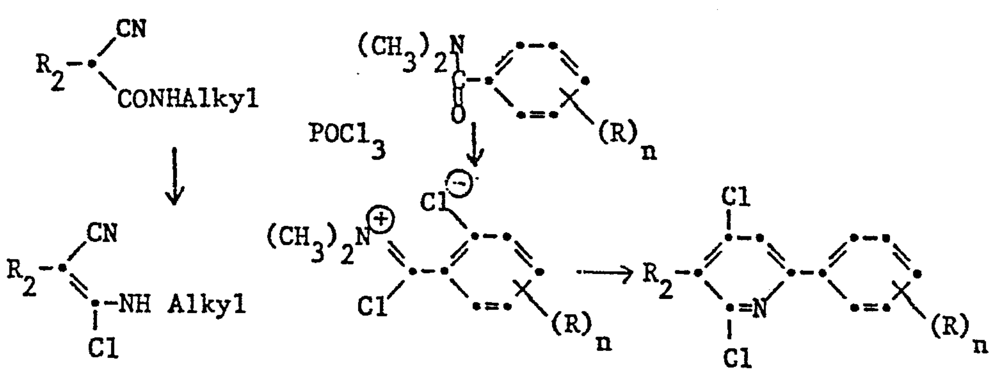


In den obigen Formeln haben R, $R_2$ und n die in Formel I gegebene Bedeutung.

Die Synthese solcher Verbindungen oder der Austausch von Resten $R_1$, $R_2$ und $R_3$ durch andere in der Definition gegebene Substituenten ist nicht Bestandteil der Erfindung. Für die Herstellung dieser Verbindungen verweisen wir auf die Beispiele oder auf die Fachliteratur. Siehe dazu auch "The Chemistry of Heterocyclic compounds" 16 Interscience Publishers, New York 1962 Seiten 119 ff.

Die Verbindungen der Formel I können für sich allein oder zusammen mit anderen Wirkstoffen verwendet werden.

Dabei werden Verbindungen der Formel I in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie

Aethanol, Aethylenglykol, Aethylenglykolmonomethyl- oder äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle woe epoxydiertes Kokosnussöl oder Sojaöl; oder Wasser.

Als feste Trägerstoffe, z.B. für Stäubemittel und dispergierbare Pulver,werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulsonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vir und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate, wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pri Propylenglykol-Einheit 1 bis 5 Aethylenglykoleinheiten.

Als Beispiele nichtionischer Tenside seien Nonylphenolpolyäthoxyäthanole, Ricinussölpolyglykoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in Der Formulierungstechnik gebräuchlichen Tenside sind u.a. in folgenden Publikationen beschrieben:

"Mc Cutcheon's Detergents and Emulsifiers Annual" MC Publishing Corp., Ringwood, New Jersey, 1979.
Sisely and Wood, "Encyclopedia of Surface Active Agents", Chemical Publishing Co., Inc. New. York, 1964.

Die pestiziden Zubereitungen enthalten in der Regel 0,1 bis 99%, insbesondere 0,1 bis 95%, Wirkstoff der Formel I, 1 bis 99% eines festen oder flüssigen Zusatzstoffes und 0 bis 25%, insbesondere 0,1 bis 25%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel, sowie Dünger oder andere Wirkstoffe zur Erzielung spezieller Effekte enthalten.

In den nachfolgenden Beispielen sind die Temperaturen in Celsiusgraden angegeben, Prozente und Angaben von "Teilen" beziehen sich auf das Gewicht.

Beispiel 1: 2-para-Tolyl-4,6-bis-isopropyloxy-pyrimidin

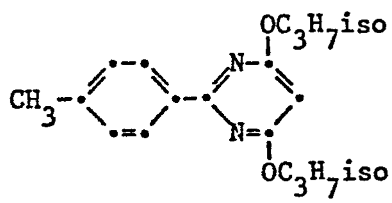

(a) Man löst 21,16 g Natrium in wasserfreiem Isopropanol. In die entstandene Lösung trägt man danach bei 60-65°C innerhalb von 15 Minuten 95,64 g 4,6-Dichlor-2-para-tolyl-pyrimidin ein. Das Gemisch wird anschliessend zum Sieden erhitzt und zur Vervollständigung der Reaktion noch 4 Stunden am Rückfluss weitergekocht. Dann wird der überschüssige Isopropanol abdestilliert und das zurückbleibende Oel in Chloroform aufgenommen. Die Chloroformschicht wird mit Wasser gewaschen, über Natriumsulfat getrocknet, filtriert und das Lösungsmittel wird abdestilliert. Man erhält so 112 g 2-para-Tolyl-4,6-bis-isopropyloxy-pyrimidin als gelbliches Oel, welches man zwecks Reinigung am Hochvakuum destilliert. Der Siedepunkt beträgt 123°C/5.332 Pascal.

Das als Ausgangsprodukt benötigte 2-para-Tolyl-4,6-dichlor-pyrimidin wird auf folgende Weise hergestellt:

b) 102,3 g p-Tolylamidinhydrochlorid und 99,3 g Malonsäurediäthylester werden in 520 ml wasserfreiem Aethanol angeschlämmt. Unter gutem Rühren und Kühlung lässt man nun 323,7 g einer 30%igen Natriummethylatlösung einfliessen. Danach wird zum Rückfluss erhitzt und 4 bis 5 Stunden am Rückfluss gerührt. Nach Abdestillation des Lösungsmittels wird der Rückstand in 1000 ml Wasser aufgenommen, auf 80°C erhitzt und die etwas trübe Lösung über Kieselsäure filtriert. Nach dem Abkühlen wird mit 15%iger Salzsäure angesäuert. Der dicke Kristallbrei wird abfiltriert, mit Wasser gewaschen und bei 100°C getrocknet. Man erhält 100-110 g 2-para-Tolyl-4,6-Dihydroxypyrimidin, Schmelzpunkt 314°C (Zersetzung).

(c) 72,6 g der Dihydroxy-Verbindung werden mit 72,6 g N,N-Dimethylanilin und 363 g Phosphoroxychlorid zum Sieden erhitzt und eine Stunde am Rückfluss gerührt. Nach Abdestillation des überschüssigen Phosphoroxychlorids wird das zurückbleibende Produkt, zur Entfernung des noch anhaftenden Phosphoroxychlorids, mit Eiswasser behandelt, danach mit Eiswasser fein gemahlen, abfiltriert, mit Eiswasser gewaschen und bei 40-50°C im Vakuum getrocknet. Man erhält so 85,9 g 2-para-Tolyl-4,6-dichloro-pyrimidin vom Schmelzpunkt 86-87°C.

<u>Beispiel 2:</u> 2-para-Tolyl-4,6-bis-isopropyloxy-5-brom-pyrimidin

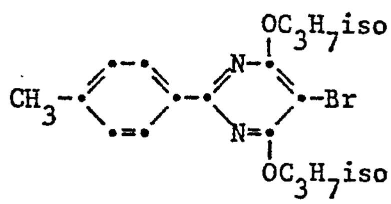

Man erhitzt 111,7 g 4,6-Di-isopropyloxy-2-para-tolyl-pyrimidin und 450 ml Tetrachlorkohlenstoff auf 70-75°C. In die entstandene Lösung gibt man 0,5 g Dibenzoylperoxid und anschliessend innerhalb von 45 Minuten ein Gemisch von 1 g Azoisobutyronitril und 70,8 g N-Bromsuccinimid. Zur Vervollständigung der Reaktion wird noch 2 Stunden am Rückfluss erhitzt. Das ausgefallene Succinimid wird dann abfiltriert und der überschüssige Tetrachlorkohlenstoff abdestilliert. Man erhält 141 g Titelprodukt, welches nach Behandlunf mit Methanol zwecks Reinigung, einen Schmelzpunkt von 74-75°C aufweist.

Beispiel 3: 2-para-Tolyl-4,6-dimethoxy-pyrimidin

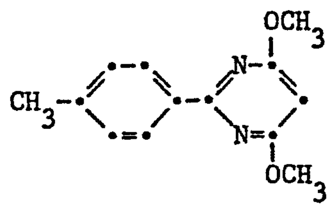

156,1 g einer 30,5%igen Natriummethylatlösung werden mit 700 ml wasserfreiem Methanol verrührt. In die Lösung werden nun innerhalb von 10 Minuten unter leichter Kühlung 95,64 g 2-para-Tolyl-4,6-dichloro-pyrimidin eingetragen. Danach wird auf Rückfluss erhitzt und 4 Stunden am Sieden gehalten. Nach Abdestillieren des Lösungsmittels wird das zurückbleibende Produkt in 1000 ml Wasser eingetragen. Zur Entfernung des entstandenen Natriumchlorids wird mit Wasser fein gemahlen. Danach abfiltriert, mit Wasser gewaschen und an der Luft getrocknet. Man erhält so 90,4 g Titelverbindung mit einem Schmelzpunkt von 61-62°C.

Beispiel 4: 2-para-Chlorphenyl-4,6-dihydroxy-pyrimidin

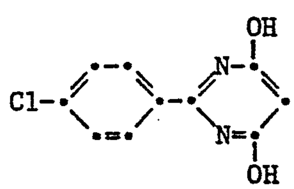

Zu einer Suspension von 38,2 g 4-Chlorbenzylamidin-Hydrochlorid und 33,6 g Malonsäurediäthylester in 175 ml Methanol gibt man innerhalb 10 Minuten 108 g 30%ige Natriummethylat/Methanol-Lösung und kocht anschliessend das Ganze während 5 Stunden am Rückfluss. Dann wird das Lösungsmittel am Rotationsverdampfer abdestilliert und der Rückstand in 1000 ml heissem Wasser aufgenommen und filtriert. Das Filtrat wird

dann auf pH 1 angesäuert, der ausgefallene Niederschag wird abfiltriert und im Vakuum bei 80°C getrocknet. Man erhält so 44 g 2-para-Chlorphenyl-4,6-dihydroxypyrimidin mit einem Schmelzpunkt von 333°C (Zersetzung).

Beispiel 5: 2-para-Chlorphenyl-4,6-dichlor-pyrimidin

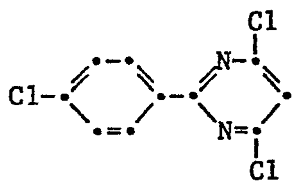

Zu 22 ml N,N-Dimethylanilin tropft man bei Raumtemperatur 50 ml Phosphoroxychlorid ($POCl_3$), dann werden unter Kühlung, so dass die Temperatur unterhalb 40°C bleibt, 22,3 g 2-para-Chlorphenyl-4,6-dihydroxy-pyrimidin portionenweise zugegeben und 2 Stunden bei Raumtemperatur gerührt, nachher noch 2 Stunden unter Rückfluss gekocht. Das Reaktionsgemisch wird anschliessend am Rotationsverdampfer eingeengt und der Rückstand mit 500 ml Wasser zerrieben. Das Produkt wird abgenutscht, in Methylenchlorid gelöst, mit Bleicherde behandelt, getrocknet und eingeengt. Der Rückstand kristallisiert und ergibt 16,2 g 2-para-Chlorphenyl-4,6-dichlorpyrimidin mit Schmelzpunkt 119-120°C. Eine bei 80°/0,02 mbar sublimierte Probe scmilzt bei 120-121°C.

Beispiel 6: 2-para Methoxyphenyl-4,6-dihydroxy-pyrimidin

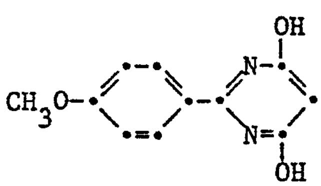

Zu einer Suspension von 112 g para-Methoxybenzamidin-Hydrochlorid und 101 g Malonsäurediäthylester in 520 ml Aethanol werden innerhalb von

10 Minuten 338 g 30%ige Natriummethylat/Methanol-Lösung gegeben und das Ganze anschliessend während 5 Stunden am Rückfluss gekocht. Das Reaktionsgemisch wird anschliessend am Rotationsverdampfer eingeengt und der Rückstand in 1000 ml 80°C warmem Wasser gelöst. Man filtriert und säuert das Filtrat bis pH 1 an. Der Niederschlag wird abfiltriert und im Vakuum bei 80°C getrocknet. Man erhält so 109,8 g 2-para Methoxyphenyl-4,6-dihydroxypyrimidin mit einem Schmelzpunkt von 318°C (Zersetzung).

Beispiel 7: 2-para Methoxyphenyl-4,6-dichlor-pyrimidin

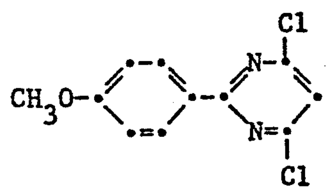

Zu 54,5 g 2-para-Methoxyphenyl-4,6-dihydroxy-pyrimidin tropft man unter Kühöen, so dass die Reaktionstemperatur 45°C nicht überschreitet, innerhalb 30 Minuten 126 ml Phosphoroxychlorid ($POCl_3$) und anschliessend 57 ml N,N-Dimethylanilin. Das Reaktionsgemisch wird anschliessend während 2 Stunden bei Raumtemperatur gerührt und dann noch 2 Stunden unter Rückfluss gekocht. Dann wird am Rotationsverdampfer eingeengt und der Rückstand in 2 l Eis/Wasser zerrieben. Das feste Produkt wird abgenutscht, in 1,5 l Methylenchlorid gelöst, mit Bleicherde behandelt und getrocknet. Nach dem Filtrieren und Einengen der Methylenchlorid-Lösung erhält man einen Rückstand, der sich aus Aethanol umkristallisieren lässt. Man erh•lt so 51 g kristallines 2-para-Methoxyphenyl-4,6-dichlor-pyrimidin vom Schmelzpunkt 127-128°C.

In analoger Weise zu diesen Beispielen werden folgende Verbindungen hergestellt:

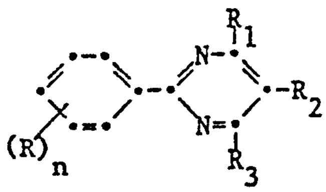

| No. | $(R)_n$ | $R_1$ | $R_2$ | $R_3$ | phys. Daten |
|---|---|---|---|---|---|
| 1 | $(H)_5$ | Cl | H | Cl | Smp. 95-96° |
| 2 | 4- $CH_3$ | Cl | H | Cl | Smp. 86-87° |
| 3 | 4- $CH_3$ | Cl | $CH_3$ | Cl | Smp.153-154° |
| 4 | 4- $CH_3$ | Cl | 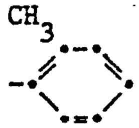 | Cl | Smp. 132-133° |
| 5 | $(H)_5$ | Cl | H | $CH_3$ | Smp. 71-72° |
| 6 | 4- $CH_3$ | Cl | H | $CH_3$ | Smp. 103-104° |
| 7 | 4- $CH_3$ | Cl | H | OH | Smp. 229-234° |
| 8 | 4-$CH_3$ | Cl | H | $OCH_3$ | Smp. 92-93° |
| 9 | 4-$CH_3$ | Cl | $CH_3$ | $OCH_3$ | Smp. 143-144° |
| 10 | 4-$CH_3$ | Cl | H | $OC_3H_7$iso | Smp. 55-57° |
| 11 | 4-$CH_3$ | Cl | H | 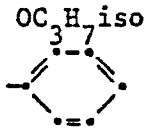 | Smp. 86-87° |
| 12 | 4-$CH_3$ | Cl | H | 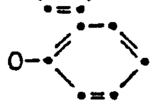 | Smp. 102-104° |
| 13 | 4-$CH_3$ | Cl | H | $NHCH_3$ | Smp. 107° |
| 14 | 4-$CH_3$ | Cl | Br | $NHCH_3$ | Smp. 105-107° |
| 15 | 4-$CH_3$ | Cl | H | $N(C_2H_5)_2$ | Smp. 74-75° |
| 16 | $(H)_5$ | $CH_3$ | H | OH | Oel |
| 17 | 4-$CH_3$ | $CH_3$ | H | OH | Smp. 206-207° |
| 18 | $(H)_5$ | $CH_3$ | H | $OCH_3$ | Sdp.156-8°/ $1.33 \cdot 10^3$ Pa |
| 19 | 4-$CH_3$ | $CH_3$ | H | $OCH_3$ | Smp. 66-67° |

| No. | $(R)_n$ | $R_1$ | $R_2$ | $R_3$ | phys. Daten |
|---|---|---|---|---|---|
| 20 | 4-$CH_3$ | $CH_3$ | H | 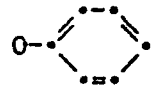 | Smp. 90-91° |
| 21 | $(H)_5$ | $CH_3$ | H | $OC_2H_4OCH_3$ | Sdp.158-160°/ 13.33 Pa |
| 22 | $(H)_5$ | $CH_3$ | H | $(OC_2H_4)_2OCH_3$ | Sdp.148-150°/ 2.66 Pa |
| 23 | 4-$CH_3$ | $CH_3$ | H | $OC_2H_4OCH_3$ | Smp. 61-62° |
| 24 | $(H)_5$ | $CH_3$ | H | $N(CH_3)_2$ | Smp. 55-57° |
| 25 | 4-$CH_3$ | $CH_3$ | H | $N(CH_3)_2$ | Smp. 97-98° |
| 26 | 4-$CH_3$ | $CH_3$ | Br | $N(CH_3)_2$ | Smp. 49-50° |
| 27 | $(H)_5$ | $CH_3$ | H | 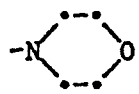 | Smp. 88-90° |
| 28 | 4-$CH_3$ | $CH_3$ | H | 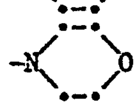 | Smp. 123-124° |
| 29 | 4-$CH_3$ | $CH_3$ | Br | 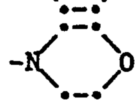 | Smp. 113-114° |
| 30 | 4-$CH_3$ | $OCH_3$ | H | 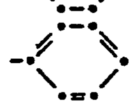 | Smp. 99-100° |
| 31 | 4-$CH_3$ | $OCH_3$ | H | $OCH_3$ | Smp. 61-62° |
| 32 | 4-$CH_3$ | $OCH_3$ | $CH_3$ | $OCH_3$ | Smp. 93-94° |
| 33 | 4-$CH_3$ | $OCH_3$ | 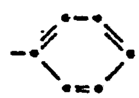 | $OCH_3$ | Smp. 214° |
| 34 | 4-$CH_3$ | $OC_2H_5$ | H | $OC_2H_5$ | Smp. 71° |
| 35 | 4-$CH_3$ | $OC_3H_7n$ | H | $OC_3H_7n$ | Smp. 62° |
| 36 | 4-$CH_3$ | $OC_3H_7iso$ | H | $OC_3H_7iso$ | Sdp. 123°/5.332 Pa Beispiel 1 |
| 37 | 4-$CH_3$ | $OC_3H_7iso$ | Br | $OC_3H_7iso$ | Smp. 73-74° Beispiel 2 |
| 38 | 4-$CH_3$ | $OC_4H_9n$ | H | $OC_4H_9n$ | Sdp. 158-161°/ 13.332 Pa |
| 39 | 4-$CH_3$ | 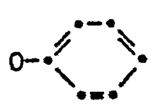 | H | 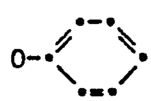 | Smp. 125-126° |

| No. | $(R)_n$ | $R_1$ | $R_2$ | $R_3$ | phys. Daten |
|---|---|---|---|---|---|
| 40 | $4-CH_3$ | $SC_2H_5$ | H | $SC_2H_5$ | Smp. 55-56° |
| 41 | $4-CH_3$ | $OC_2H_4OCH_3$ | H | $OC_2H_4OCH_3$ | Oel |
| 42 | $4-CH_3$ | $OC_2H_4OCH_3$ | $CH_3$ | $OC_2H_4OCH_3$ | Oel |
| 43 | $4-CH_3$ | $OC_2H_4OCH_3$ | Cl | $OC_2H_4OCH_3$ | Smp. 55-57° |
| 44 | $4-CH_3$ | $OC_2H_4OCH_3$ | Br | $OC_2H_4OCH_3$ | Smp. 55-56° |
| 45 | $4-CH_3$ | $OC_2H_4OCH_3$ | H | $NHCH_3$ | Smp. 65-66° |
| 46 | $4-CH_3$ | $OC_2H_4OCH_3$ | Br | $NHCH_3$ | Oel |
| 47 | $4-CH_3$ | $OC_2H_4OCH_3$ | H | $N(C_2H_5)_2$ | Oel |
| 48 | $4-CH_3$ | 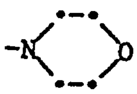 | H | 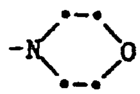 | Smp. 125-126° |
| 49 | $4-CH_3$ | Br | H | Br | Smp. 125-126° |
| 50 | $(H)_5$ | Br | H | Br | Smp. 115-118° |
| 51 | $(H)_5$ | Cl | H | OH | Smp. 218-221° |
| 52 | $(H)_5$ | Cl | H | SH | Smp. 150° Z |
| 53 | 4-Cl | Cl | H | Cl | Smp. 120° |
| 54 | $4-OCH_3$ | Cl | H | Cl | Smp. 127-128° |
| 55 | 4-CN | Cl | H | Cl | Smp. 230-232° |
| 56 | $3-CF_3$ | Cl | H | Cl | Smp. 56-57° |
| 57 | $2-CH_3$ | Cl | H | Cl | Smp. 74-75° |
| 58 | $2-CH_3$ | Cl | Cl | Cl | Smp. 122-125° |

| No. | $(R)_n$ | $R_1$ | $R_2$ | $R_3$ | phys. Daten |
|---|---|---|---|---|---|
| 59 | 3-Cl, 4-F | Cl | H | Cl | Smp. 94-95° |
| 60 | $2,6(CH_3)_2$ | Cl | H | Cl | Smp. 103-104° |
| 61 | $3,4(CH_3)_2$ | Br | H | Br | |
| 62 | $4-C_3H_7i$ | Cl | H | Cl | Smp. 63-64° |
| 63 | $4-C_3H_7i$ | Cl | H | F | |
| 64 | 4-Cl | F | H | F | Smp. 139-141° |
| 65 | $2-CH_3$, $6-C_2H_5$ | Cl | H | Cl | |
| 66 | $2-CH_3$, $6-C_2H_5$ | Cl | H | $C_2H_5$ | |
| 67 | 2-Cl | Cl | H | Cl | Smp. 116-118° |
| 68 | $3-C_2H_5$ | Cl | H | Cl | |
| 69 | $4-CH_3$ | Cl | F | Cl | |
| 70 | 4-F | Cl | F | Cl | |
| 71 | $3-CHF_2$ | Cl | H | Cl | |
| 72 | $2,4(CH_3)_2$ | Br | H | Br | |
| 73 | $2,3,6(CH_3)_3$ | Cl | H | Cl | |
| 74 | $3-C_3H_7i$ | Cl | H | Cl | |
| 75 | $4-CHF_2$ | Cl | H | Cl | |
| 76 | 2-Cl, $4-CH_3$ | Br | H | Br | |
| 77 | $3,4(Cl)_2$ | Cl | H | OH | |
| 78 | $4-OCH_2CH=CH_2$ | Cl | H | Cl | Smp. 57-58° |
| 79 | 4-OH | F | H | F | |
| 80 | $4-COCH_3$ | Cl | H | Cl | Smp. 129-130° |
| 81 | $4-OCOC_2H_5$ | Cl | H | Cl | |
| 82 | $4-OCH(CH_3)COOCH_3$ | Cl | H | Cl | |
| 83 | $4-OCF_2Cl$ | Cl | H | $OC_2H_5$ | |
| 84 | 4-OH | Cl | H | Cl | Smp. 135-137° |
| 85 | $4-OCON(CH_3)_2$ | Cl | H | Cl | Smp. 191-193° |
| 86 | $3-CH_2F$ | Cl | H | Cl | |
| 87 | $2-COOCH_3$ | Cl | H | $OC_4H_9$ n | |
| 88 | $4-CH_2F$ | Cl | H | Cl | |
| 89 | $4-COOCH_3$ | Cl | H | Cl | Smp. 135-140° |
| 90 | $4-COOC_4H_9n$ | Cl | H | $OC_4H_9n$ | |

| No. | $(R)_n$ | $R_1$ | $R_2$ | $R_3$ | phys.Daten |
|---|---|---|---|---|---|
| 91 | 4-Cl, $2,6(OCH_3)_2$ | Cl | H | Cl | |
| 92 | 4-CHO | Cl | H | Cl | Smp. 160-162° |
| 93 | $3-CH_2Cl$ | Cl | H | Cl | |
| 94 | $3,5(CF_3)_2$ | Cl | H | Cl | |
| 95 | $4-CF_3$ | Br | H | Br | |
| 96 | $4-OCHF_2$ | Cl | H | Cl | |
| 97 | $3,5(OC_2H_5)_2$ | Cl | H | Cl | |
| 98 | $4-OC_3H_7i$ | F | H | F | |
| 99 | $3-NO_2$ | Cl | H | Cl | Smp. 136-138° |
| 100 | $4-NO_2$ | Cl | H | Cl | Smp. 167-168° |
| 101 | $3-NO_2$, $4-CH_3$ | Cl | H | Cl | |
| 102 | 2-Cl, $4-NO_2$ | Cl | H | Cl | |
| 103 | $2-N(CH_3)_2$ | Cl | H | Cl | |
| 104 | $3-NHCOCH_3$ | Br | H | Br | |
| 105 | $3-NHCOCH_2Cl$ | Cl | H | Cl | |
| 106 | $4-OCF_3$ | Cl | H | $OC_3H_7i$ | |
| 107 | $3-OCF_2Cl$, 5-Cl | Cl | H | Cl | |
| 108 | $2-CON(CH_3)_2$ | Cl | H | Cl | |
| 109 | $4-OCF_2CHF_2$ | Cl | H | Cl | |
| 110 | $4-CONHC_4H_9n$ | Cl | H | Cl | |
| 111 | $4-NHCOCH_2Cl$ | Cl | H | Cl | Smp. 196-198° |
| 112 | $4-COCH_3$, $3-CH_3$ | Cl | H | $CH_3$ | |
| 113 | $3-CH_2-COCH_3$ | F | H | $OCH_3$ | |
| 114 | $4-COC_3H_7n$ | Cl | H | Cl | |
| 115 | $4-OCF_2CHFCl$ | Cl | H | Cl | |
| 116 | 2-OH | Cl | H | Cl | |
| 117 | $4-COOCH_2CH=CH_2$ | Cl | H | Cl | |
| 118 | $4-COOCH_2C≡CH$ | Cl | H | Cl | Smp. 105-109° |
| 119 | 2-Cl, 6-C≡CH | Cl | H | Cl | |
| 120 | $3-C≡C-C(CH_3)_2OCH_3$ | Br | H | Br | |
| 121 | $4-C≡C-C(CH_3)_2OH$ | Cl | H | Cl | |

| No. | $(R)_n$ | $R_1$ | $R_2$ | $R_3$ | phys.Daten |
|---|---|---|---|---|---|
| 122 | 4-C≡C-$C(CH_3)_2OCH_3$ | Cl | H | Cl | |
| 123 | $3,5(I)_2$, 4-$OCH(CH_3)COOCH_3$ | Cl | H | Cl | |
| 124 | $(H)_5$ | Cl | $CF_3$ | Cl | |
| 125 | 4-CH=CH-$C_4H_9$n | Cl | H | Cl | |
| 126 | $4Cl_3$ | Cl | $CF_3$ | Cl | |
| 127 | 4-OH | Br | H | Br | |
| 128 | 4-Br | Cl | H | Cl | Smp. 130-131° |
| 129 | 3-OH | Cl | H | Cl | Smp. 144-146° |
| 130 | 3-$OCH_3$ | Cl | H | Cl | Smp. 97-100° |
| 131 | 3-$OCOCH_2Cl$ | Cl | H | Cl | |
| 132 | 2-$OCH_3$ | Cl | H | Cl | Smp. 67-70° |
| 133 | $2,6(F)_2$ | Cl | H | Cl | |
| 134 | 4-F | Cl | H | Cl | Smp. 102-105° |
| 135 | 3-Cl, 4-$CH_3$ | Cl | H | Cl | Smp. 91-92° |
| 136 | $(H)_5$ | F | H | F | Smp. 114-116° |
| 137 | $(H)_5$ | F | H | Cl | Smp. 105° |
| 138 | $2,5(Cl)_2$, 4-OH | F | H | F | |
| 139 | 2-Cl, 4-$OCH(CH_3)COOC_2H_5$ | Cl | H | Cl | |
| 140 | $2,3,5(Cl)_3$, 4-OH | Cl | H | Cl | |
| 141 | $2,3,5(Cl)_3$, 4-$OC_2H_5$ | Cl | H | Cl | |
| 142 | $2,3,5,6(CH_3)_4$, 4-$NO_2$ | Cl | H | Cl | |
| 143 | $(H)_5$ | F | $CF_3$ | Cl | |
| 144 | 3-$SO_2N(CH_3)_2$ | Cl | H | Cl | |
| 145 | 4-$CSN(CH_3)_2$ | Cl | H | Cl | |
| 146 | 4-$C(CH_3)=CH_2$ | Cl | H | Cl | |
| 147 | 4-$CH_2COOCH_3$ | Cl | H | Cl | |
| 148 | 4-$CH_2PO(OC_2H_5)_2$ | Cl | H | Cl | Smp. 110-112° |
| 149 | 4-$CH_2PO(OH)_2$ | Br | H | Br | |
| 150 | 4-$SO_2N(CH_3)_2$, 5-$CH_3$ | Cl | H | $OC_4H_9$n | |
| 151 | 4-$PO(OH)_2$ | Br | H | Br | |
| 152 | 4-$PO(OCH_3)_2$ | Cl | H | Cl | |
| 153 | 3-$PO(OCH_3)_2$ | Cl | H | Cl | |

| No. | $(R)_n$ | $R_1$ | $R_2$ | $R_3$ | phys.Daten |
|---|---|---|---|---|---|
| 154 | H | $SOCH_3$ | H | Cl | |
| 155 | $4-CH_2CH=CH_2$ | Cl | H | Cl | |
| 156 | $3-C\equiv CH$, $5-CH_3$ | Cl | H | Cl | |
| 157 | $2-C\equiv CH$ | Cl | H | Cl | |
| 158 | $4-C\equiv CH$ | Cl | H | Cl | Smp. 168-170° |
| 159 | H | $SOCH_3$ | H | Br | |
| 160 | $4-C(OCH_3)_2C_3H_7n$ | Cl | H | $OCH_3$ | |
| 161 | $2-CH_3$, $5-N(CH_3)_2$ | Cl | H | Cl | |
| 162 | $2-CH_3$, 5-Cl | Cl | H | Cl | |
| 163 | 3-Br, 4-OH | Cl | H | $OCH_2CH=CH_2$ | |
| 164 | 3-Br, $4-OC_3H_7n$ | Cl | H | Cl | |
| 165 | $3-NO_24-Cl$ | Cl | H | Cl | Smp. 158-159° |
| 166 | $3-NH_2$, 4-Cl | Cl | H | Cl | |
| 167 | $3-CH_3$, $4-NO_2$ | Cl | H | Cl | Smp. 173-175° |
| 168 | $3-CH_3$, $4-NH_2$ | Cl | H | Cl | fest |
| 169 | $3-CH_3$, $4-NHCON(CH_3)_2$ | F | H | $OCH_2CH=CH_2$ | |
| 170 | 2-Cl, $5-CF_3$ | Cl | H | Cl | |
| 171 | $3-CF_3$, 4-Cl | Cl | H | Cl | |
| 172 | $4-CH_3$ | $SOCH_3$ | H | Cl | |
| 173 | 2-Cl, $5-N(CH_3)_2$ | Cl | H | OH | |
| 174 | $2,6(OCH_3)_2$, $3-NO_2$ | Cl | H | Cl | |
| 175 | $2,6(OCH_3)_2$, $3-NH_2$ | Cl | H | Cl | |
| 176 | $2,6(OCH_3)_2$, $3-NHCOCH_3$ | Cl | H | Cl | |
| 177 | $2-CH_3$, $6-C_2H_5$, $4-OCON(CH_3)_2$ | Cl | H | Cl | |
| 178 | $3,5(I)_2$, 4-OH | Cl | H | Cl | |
| 179 | $3,5(I)_2$, $4-OCH_3$ | Br | H | Br | |
| 180 | $3,5(Br)_2$, 4-OH | Cl | H | Cl | |
| 181 | $3,5(Br)_2$, $4-OCH_2-CH=CH_2$ | Cl | H | Cl | |
| 182 | $3,4,5(OCH_3)_3$ | Cl | H | Cl | Smp. 167-169° |
| 183 | $2,3(Cl)_2$ | Cl | H | Cl | Smp. 116-118° |

| No. | $(R)_n$ | $R_1$ | $R_2$ | $R_3$ | phys.Daten |
|---|---|---|---|---|---|
| 184 | 4-CH3 | F | H | $SOCH_3$ | |
| 185 | $(H)_5$ | $SOCH_3$ | H | CN | |
| 186 | $(H)_5$ | $SCH_3$ | H | CN | |
| 187 | $(H)_5$ | $SO_2CH_3$ | H | CN | |
| 188 | $(H)_5$ | $-O-CO-CH_3$ | H | Cl | |
| 189 | $4-CH_3$ | CN | Cl | Cl | |
| 190 | $3-SO_2NHCOONC_3H_7(i)$ | Cl | H | Cl | |
| 191 | 4- 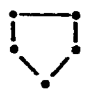 | Cl | H | Cl | |
| 192 | 3- 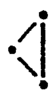 | Br | H | Br | |
| 193 | 3- 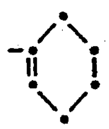 | Cl | H | Cl | |
| 194 | 3- 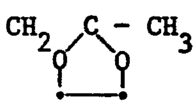 | F | H | $OCH_3$ | |
| 195 | $3-CF_3$ | OH | H | OH | Smp. 286°C |
| 196 | $4-CH_3$ | $OCH_3$ | H | OH | |
| 197 | $3-NH_2$ | Cl | H | Cl | fest |
| 198 | $4-NH_2$ | Cl | H | Cl | fest |
| 199 | $3-NHCOCH_3$ | Cl | H | Cl | Smp. 228-230° |
| 200 | $4-NHCOCH_3$ | Cl | H | Cl | Smp. 190-192° |
| 201 | $4-SO_2NHCOOCH_3$ | Cl | H | Cl | |
| 202 | $3-SO_2NCH_3COOCH_3$ | Cl | H | Cl | |
| 203 | $4-CH_3 \cdot 3-SO_2H$ | Cl | H | Cl | |
| 204 | $4-CH_3 \cdot 3-SO_2NH_2$ | Cl | H | Cl | |
| 205 | $4-NHCONHC_2H_5$ | Cl | H | Cl | |
| 206 | 4-Cl, $3-NH_2$ | Cl | H | Br | |
| 207 | 3-I | Cl | H | Cl | |
| 208 | 3- COOH | Cl | H | Cl | Smp. 250° |

| No. | $(R)_n$ | $R_1$ | $R_2$ | $R_3$ | phys.Daten |
|---|---|---|---|---|---|
| 209 | 4-COOH | Cl | H | Cl | Smp. 236-238° |
| 210 | $3-CH_3$ | Cl | H | OH | Smp. 195-200° |
| 211 | $4-N(CH_3)_2$ | Cl | H | Cl | Smp. 150-155° |
| 212 | $3NHCH_3$ | Cl | H | Cl | |
| 213 | $HNHCH_3$ | | | | |
| 214 | 3-NHCHO | | | | |
| 215 | 4-NHCHO | | | | |
| 216 | 3-NHCO 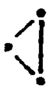 | Cl | H | Cl | |
| 217 | $4-OCH_2OCH_3$ | Cl | H | Cl | |
| 218 | $4-SCH_3$ | Cl | H | F | |
| 219 | 3-SH | Cl | H | Cl | |
| 220 | $4-SCH_3$ | Cl | H | Cl | Smp. 109-111° |
| 221 | $4-OCOOCH_3$ | Cl | H | F | |
| 222 | $3-OCOOCH_3$ | Cl | H | Cl | |
| 223 | 3-F | Cl | H | Cl | Smp. 72-74° |
| 224 | $4-OC_2H_4OC_2H_5$ | Cl | H | Cl | Smp. 75-77° |
| 225 | $4-OC_2H_4OC_3H_7n$ | Cl | H | Cl | Wachs |
| 226 | $4-CH_2-CCl=CH_2$ | $CH_3$ | H | Cl | |
| 227 | $4-SO_2CH_3$ | Cl | H | Cl | Smp. 163-165° |
| 228 | $4-OC_2H_4OC_2H_4OC_2H_5$ | Cl | H | Cl | Smp. 42-43° |
| 229 | $4-OCH_3$ | Br | H | Br | Smp. 129-131° |
| 230 | $-OC_6H_{13n}$ | Cl | H | Cl | |
| 231 | $4-OCH_2-C\equiv CH$ | Cl | H | Cl | |
| 232 | $4-OC_2H_4N(C_2H_5)_2$ | Cl | H | Cl | |
| 233 | $4-OC_2H_4Cl$ | Cl | H | Cl | |
| 234 | $4-OC_2H_4OH$ | Cl | H | Cl | |
| 235 | $4-OC_2H_4SCH_3$ | Cl | H | Cl | |
| 236 | $4-OC_2H_4OC_2H_4Cl$ | Cl | H | Cl | Smp. 88-89° |
| 237 | $4-OCF_3$ | Cl | H | Cl | |
| 238 | $4-OC_2H_5$ | Cl | H | Cl | |
| 239 | $4-OCOCH_3$ | Cl | H | Cl | Smp. 113-115° |
| 240 | $4-OCH(CH_3)COOCH_3$ | Cl | H | Cl | |

| No. | $(R)_n$ | $R_1$ | $R_2$ | $R_3$ | phys. Daten |
|---|---|---|---|---|---|
| 241 | $4\text{-}OCH(CH_3)COOCH_3$ | Br | H | Cl | Smp. 118-120° |
| 242 | $4\text{-}OCOCH{=}CH_2$ | Cl | H | Cl | |
| 243 | $4\text{-}OCOC_3H_6CH{=}CH_2$ | Cl | H | Cl | |
| 244 | $4\text{-}OCH_2CON(CH_3)_2$ | Cl | H | Cl | |
| 245 | $4\text{-}OCH_2CH{=}CHCH_3$ | Cl | H | Cl | |
| 246 | $4\text{-}OC_2H_4CH{=}CClCH_3$ | Cl | H | Cl | |
| 247 | $(H)_5$ | Cl | $CHF_2$ | Cl | |
| 248 | $(H)_5$ | Cl | H | F | |
| 249 | $(H)_5$ | Cl | H | Br | |
| 250 | $(H)_5$ | J | H | J | |
| 251 | $4\text{-}SOCH_3$ | Cl | H | Cl | |
| 252 | $4\text{-}SC_2H_4N(CH_3)_2$ | Cl | H | Cl | |
| 253 | $4\text{-}SC_2H_4OCH_3$ | Cl | H | Cl | |
| 254 | $4\text{-}SC_6H_{13n}$ | Cl | H | Cl | |
| 255 | $4\text{-}SC_2H_4COOC_4H_9$ | Cl | H | Cl | |
| 256 | $4\text{-}SCOCH_3$ | Cl | H | Cl | |
| 257 | $4\text{-}SCH_2CH{=}CH_2$ | Cl | H | Cl | |
| 258 | $4\text{-}NH_2$ | Br | H | Br | |
| 259 | $4\text{-}NHC_6H_{13n}$ | Cl | H | Cl | |
| 260 | $4\text{-}NHC_3H_{7i}$ | Cl | H | Cl | |
| 261 | $4\text{-}NHCH_2COOCH_3$ | Cl | H | Br | |
| 262 | $4\text{-}NHCH(CH_3)CON(CH_3)_2$ | Cl | H | Cl | |
| 263 | $4\text{-}NHCOCH{=}CH_2$ | Cl | H | Cl | |
| 264 | $4\text{-}NHCH_2\text{-}CH{=}CH_2$ | Cl | H | Cl | |
| 265 | $4\text{-}N(CH_2\text{-}CH{=}CH_2)_2$ | Cl | H | Cl | |
| 266 | $4\text{-}NHCH\text{-}C{\equiv}CH$ | Cl | H | Cl | |
| 267 | $4\text{-}NHCH_2CH{=}CHC_2H_5$ | Cl | H | Cl | |
| 268 | $4\text{-}NH(CH_2)_4C{\equiv}CH$ | Cl | H | Cl | |
| 269 | $4\text{-}NHOCH_3$ | Cl | H | Cl | |
| 270 | $4\text{-}NHOCH_2CH{=}CH_2$ | Cl | H | Cl | |
| 271 | $4\text{-}N(CH_3)OCH_3$ | Cl | H | Cl | |

| No. | $(R)_n$ | $R_1$ | $R_2$ | $R_3$ |
|---|---|---|---|---|
| 272 | $4-N(CH_3)COCH_3$ | Cl | H | Cl |
| 273 | $4-B(OCH_3)COCH_3$ | Cl | H | Cl |
| 274 | 4-NH 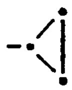 | Cl | H | Cl |
| 275 | 4-NH 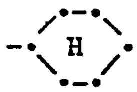 | Cl | H | Cl |
| 276 | 4- 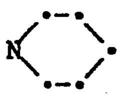 | Cl | H | Cl |
| 277 | 4- 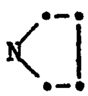 | Cl | H | Cl |
| 278 | 4- 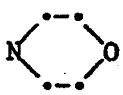 | Br | H | Br |
| 279 | 4- 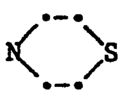 | Cl | H | Cl |
| 280 | 4- 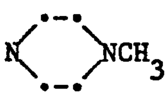 | Cl | H | F |
| 281 | $4-NHCOOCH_3$ | Cl | H | Cl |
| 282 | $4-N(CH_3)CO\ OC_3H_7i$ | Cl | H | Cl |
| 283 | $4-NHCONHCH_3$ | Cl | H | Cl |
| 284 | $4-NHCON(CH_3)_2$ | Cl | H | Cl |
| 285 | $4-N(CH_3)CONHCH_3$ | Cl | H | Cl |
| 286 | $4-N(CH_3)CON(CH_3)OCH_3$ | Cl | H | Cl |
| 287 | $COOC_6H_{13}n$ | Cl | H | Cl |
| 288 | $4-OCOCH_2CH=CHCH_3$ | Cl | H | Cl |
| 289 | $4-CONH_2$ | Cl | H | Cl |
| 290 | $4-CON(C_3H_7n)_2$ | Cl | H | Cl |
| 291 | $4-CONHC_6H_{13}n$ | Cl | H | Cl |
| 292 | $4-OCOC_2H_4N(C_2H_5)_2$ | Br | H | Br |

| No. | $(R)_n$ | $R_1$ | $R_2$ | $R_3$ |
|---|---|---|---|---|
| 293 | 4-$CONHOCH_3$ | Cl | H | Cl |
| 294 | 4-$CON(CH_3)_2$ | Cl | H | Cl |
| 295 | 4-CHO | Br | H | Br |
| 296 | 4-$COC_4H_9n$ | Cl | H | Cl |
| 297 | 4-$COCH=CH-N(CH_3)_2$ | Cl | H | Cl |
| 298 | 4-$CSN(C_3H_7)_2$ | Cl | H | Cl |
| 299 | 4-$CSNHC_6H_{13}n$ | Cl | H | Cl |
| 300 | 4-$N=CHC_3H_7i$ | Cl | H | Cl |
| 301 | 4-$N=CHC_6H_{13}n$ | Cl | H | Cl |
| 302 | 4-$N=CH(CH_3)_2$ | Cl | H | Cl |
| 303 | 4- N= 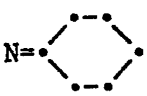 | Cl | H | Cl |
| 304 | 4-$N(CH_3)CH_2OCH_3$ | Cl | H | Cl |
| 305 | 4-$SO_2NH_2$ | Cl | H | Cl |
| 306 | 4-$SO_2N(CH_3)_2$ | Cl | H | Cl |
| 307 | 4-$SO_2NHC_4H_9$ | Cl | H | Cl |
| 308 | 3-$SO_2N$ 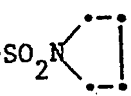 | Br | H | Br |
| 309 | 4-$SO_2NHCH_2CH=CH_2$ | Cl | H | Cl |
| 310 | 4-$CH(OCH_3)_2$ | Cl | H | Cl |
| 311 | 4-$CH(OC_2H_4OCH_3)_2$ | Cl | H | F |
| 312 | 4-$C(C_4H_9n)(OC_2H_5)_2$ | Cl | H | Cl |
| 313 | 4-$C(CH_3)(OCH_3)_2$ | Cl | H | Cl |
| 314 | 4-$C(CH_3)(OC_2H_4SCH_3)_2$ | Cl | H | Cl |
| 315 | 4-CH 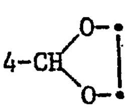 | Cl | H | Cl |
| 316 | 4-CH 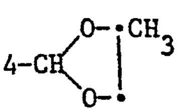 | Cl | H | Cl |

| No. | $(R)_n$ | $R_1$ | $R_2$ | $R_3$ | phys.Daten |
|---|---|---|---|---|---|
| 317 | 4-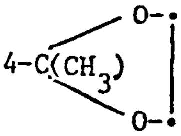 | Cl | H | Cl | |
| 318 | 4-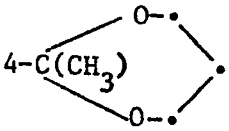 | Cl | H | Cl | |
| 319 | $4-PO(OH)OC_2H_5$ | Cl | H | Cl | |
| 320 | $4-SO_3H$ | Cl | H | Cl | |
| 321 | $4-CF_3$ | Cl | H | Cl | |
| 322 | $4-CH_2Br$ | Cl | H | Cl | Smp. 155-156° |
| 323 | $4-CH_2Cl$ | Cl | H | Cl | |
| 324 | $4-CH_2OCH_3$ | Cl | H | Cl | |
| 325 | $4-CH_2OH$ | Cl | H | Cl | |
| 326 | $4-CH_2OCOCH_3$ | Cl | H | Cl | Smp. 108-110° |
| 327 | $4-CH_2OC_4H_9n$ | Cl | H | Cl | |
| 328 | $4-CH_2SCH_3$ | Cl | H | Cl | |
| 329 | $4-CH_2N(CH_3)_2$ | Cl | H | Cl | |
| 330 | $4-CHClCH_3$ | Cl | H | F | |
| 331 | $4-C_2H_5$ | Cl | H | Cl | |
| 332 | $4-C_6H_{13}n$ | Cl | H | Cl | |
| 333 | $4-C_5H_{11}iso$ | Br | H | Br | |
| 334 | $4-C=CCH_3$ | Cl | H | Cl | |
| 335 | $4-CH=CH_2$ | Cl | H | Cl | |
| 336 | $4-CH_2-CH=CH_2$ | Cl | H | F | |
| 337 | $4-CCl=CH_2$ | Cl | H | Cl | Smp. 128-130° |
| 338 | $4-C_2H_4Cl$ | Cl | H | Cl | |
| 339 | $4-C_2H_4N(C_2H_5)_2$ | Cl | H | Cl | |
| 340 | 4- 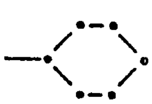 | Cl | H | Cl | |
| 341 | 4 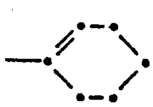 | Cl | H | Cl | |

| No. | $(R)_n$ | $R_1$ | $R_2$ | $R_3$ | phys.Daten |
|---|---|---|---|---|---|
| 342 | 4- 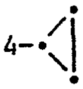 | Cl | H | Cl | |
| 343 | $4\text{-}CH{=}CH_2\text{-}CH_2OCH_3$ | Cl | H | Cl | |
| 344 | $4\text{-}N(CH_3)COCH_2Cl$ | Cl | H | Cl | |
| 345 | $4\text{-}CH_2CN$ | Cl | H | Cl | Smp. 151-158° |
| 346 | 3-F | Br | H | Br | |
| 347 | 3-Cl | Cl | H | Cl | Smp. 117-119° |
| 348 | $3\text{-}NO_2$ | Br | H | Br | Smp. 165-167° |
| 349 | $3\text{-}NO_2$ | F | H | F | |
| 350 | $3\text{-}OC_3H_7i$ | Cl | H | Cl | |
| 351 | $3\text{-}OCH_2CH{=}CHCH_3$ | Cl | H | F | |
| 352 | $3\text{-}OCH_2C{\equiv}CH$ | Cl | H | Cl | |
| 353 | $3\text{-}OC_2H_4N(C_2H_5)_2$ | Cl | H | Cl | |
| 354 | $3\text{-}OCH(CH_3)CH_2N(C_2H_5)$ | Cl | H | Cl | |
| 355 | $3\text{-}OC_2H_4Cl$ | Cl | H | Cl | |
| 356 | $4\text{-}CH_3$ | Br | H | Cl | |
| 357 | $3\text{-}OC_2H_4SC_2H_5$ | Cl | H | Cl | |
| 358 | $3\text{-}OC_2H_4OC_3H_7n$ | Cl | H | Cl | |
| 359 | $3\text{-}OCF_3$ | Cl | H | F | |
| 360 | $3\text{-}OCHF_2$ | Cl | H | Cl | |
| 361 | $3\text{-}OCF_2CHF_2$ | Cl | H | Cl | |
| 362 | $3\text{-}OCF_2CHFCl$ | Br | H | Br | |
| 363 | $3\text{-}OCOC_2H_5$ | Cl | H | Cl | |
| 364 | $3\text{-}OCOCH_2Cl$ | Br | H | Br | |
| 365 | $3\text{-}SC_2H_5$ | Cl | H | Cl | |
| 366 | $3\text{-}SCF_3$ | Cl | H | Cl | |
| 367 | $3\text{-}SCHF_2$ | Cl | H | Cl | |
| 368 | $3\text{-}SO_2CH_3$ | Cl | H | Cl | |
| 369 | $3\text{-}SC_3H_6N(CH_3)_2$ | Cl | H | Cl | |
| 370 | $3\text{-}SC_3H_6Cl$ | Cl | H | Cl | |
| 371 | $3\text{-}SC_5H_{11}iso$ | Cl | H | Cl | |

| No. | $(R)_n$ | $R_1$ | $R_2$ | $R_3$ | phys. Daten |
|---|---|---|---|---|---|
| 372 | $3\text{-}SCH_2COOC_3H_7n$ | Cl | H | F | |
| 373 | $3\text{-}S\text{-}CH_2\text{-}C{=}CH$ | Cl | H | Cl | |
| 374 | $3\text{-}NH_2$ | Br | H | Br | fest |
| 375 | $3\text{-}N(CH_3)_2$ | Cl | H | Cl | |
| 376 | $3\text{-}NHC_4H_9n$ | Cl | H | Cl | |
| 377 | $3\text{-}NHC_4H_9sek$ | Cl | H | Cl | |
| 378 | $3\text{-}N(CH_2C{=}CH)_2$ | Cl | H | F | |
| 379 | $3\text{-}NHCH_2CH{=}CH_2$ | Cl | H | Cl | |
| 380 | $3\text{-}N(CH_3)COCH_2Cl$ | Cl | H | Cl | |
| 381 | $3\text{-}SO_2NHCO_2CH_3$ | | | | Smp. 160-161° |
| 382 | $3\text{-}NHCOCH{=}CH\text{-}CH_3$ | Cl | H | Cl | |
| 383 | 3-NHOH | Br | H | Br | |
| 384 | $3\text{-}NHOC_2H_5$ | Cl | H | Br | |
| 385 | $3\text{-}NCH_3OCH_3$ | Cl | H | Cl | |
| 386 | $3\text{-}N(C_3H_7iso)CO_2C_2H_5$ | Cl | H | Cl | |
| 387 | 3- 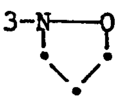 | Cl | H | Cl | |
| 388 | 3- 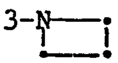 | Cl | H | Cl | |
| 389 | $3\text{-}NHCOOC_4H_9iso$ | Cl | H | Cl | |
| 390 | $3\text{-}NHCONHC_4H_9n$ | Cl | H | Cl | |
| 391 | 3- 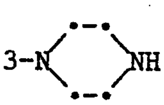 | Br | H | Br | |
| 392 | $3\text{-}N(CH_3)CON(CH_3)_2$ | Cl | H | Cl | |
| 393 | 3-COOH | Cl | H | Cl | Smp. 250°C |
| 394 | $3\text{-}COOCH_3$ | Cl | H | Cl | Smp. 190-191° |
| 395 | $3\text{-}COOCH_2CH{=}CH_2$ | Cl | H | Cl | Smp. 120-121° |
| 396 | $3\text{-}COOC_3H_7i$ | Cl | H | Cl | |
| 397 | $3\text{-}COCH_2\text{-}C{\equiv}C\text{-}C_3H_7n$ | Cl | H | Cl | |
| 398 | $3\text{-}CONH_2$ | Cl | H | Cl | |

| No. | $(R)_n$ | $R_1$ | $R_2$ | $R_3$ | phys. Daten |
|---|---|---|---|---|---|
| 399 | 3-CONHOH | Cl | H | Cl | |
| 400 | $3\text{-}CON(CH_3)_2$ | Cl | H | Cl | |
| 401 | $3\text{-}CONHCH_3$ | Br | H | Br | |
| 402 | $3\text{-}CONHCH_2CH{=}CH_2$ | Cl | H | F | |
| 403 | $3\text{-}COOC_3H_6N(CH_3)_2$ | Cl | H | Cl | |
| 404 | 3-CHO | Cl | H | Cl | |
| 405 | $3\text{-}COCH_3$ | Cl | H | Cl | |
| 406 | 3-CO- 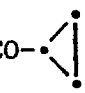 | Cl | H | Cl | |
| 407 | $3\text{-}CSNHC_4H_9n$ | Cl | H | Cl | |
| 408 | $3\text{-}CSNHC_3H_7iso$ | Cl | H | Cl | |
| 409 | 3-CS 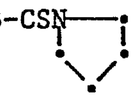 | Cl | H | Cl | |
| 410 | $3\text{-}N{=}CHC_3H_7(i)$ | Cl | H | Cl | |
| 411 | $3\text{-}N{=}C(CH_3)CH_2OCH_3$ | Cl | H | Cl | |
| 412 | $3\text{-}N{=}CHC_2H_4OC_2H_5$ | Cl | H | Cl | |
| 413 | 3-N= 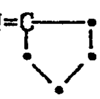 | Cl | H | Cl | |
| 414 | $3\text{-}SO_2NH_2$ | Cl | H | Cl | Smp. 207-208° |
| 415 | $3\text{-}SO_2NHCH_3$ | Cl | H | Cl | Smp. 174-175° |
| 416 | $3\text{-}SO_2N(C_4H_9n)_2$ | Cl | H | Cl | |
| 417 | $3\text{-}SO_2$ 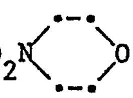 | Cl | H | Cl | |
| 418 | $3\text{-}SO_2N(CH_3)_2$ | Cl | H | Cl | Smp. 144-145° |
| 419 | $3\text{-}CH(OC_2H_5)_2$ | Cl | H | Cl | |
| 420 | $3\text{-}C(CH_3)(OCH_3)_2$ | Cl | H | Cl | |
| 421 | $3\text{-}C(CH_3)(OC_2H_4OCH_3)_2$ | Cl | H | Cl | |
| 422 | 3- 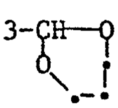 | Cl | H | Cl | |

| No. | $(R)_n$ | $R_1$ | $R_2$ | $R_3$ | phys. Daten |
|---|---|---|---|---|---|
| 423 | 3-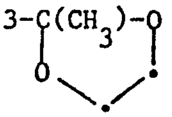 | Cl | H | Cl | |
| 424 | $3\text{-}PO(OC_2H_5)_2$ | Cl | H | Cl | |
| 425 | $3\text{-}P(OH)_2$ | Cl | H | Cl | |
| 426 | $3\text{-}P(OH)OCH_3$ | Cl | H | Cl | |
| 427 | $3\text{-}SO_3H$ | Cl | H | Cl | Smp. 95-96° |
| 428 | $3\text{-}CF_3$ | Cl | H | F | |
| 429 | $3\text{-}CH_2CN$ | Cl | H | Cl | |
| 430 | $3\text{-}CH_2Cl$ | Cl | H | Cl | |
| 431 | $3\text{-}CH_2OC_2H_5$ | Cl | H | Cl | |
| 432 | $3\text{-}CH_2OH$ | Br | H | Br | |
| 433 | $3\text{-}C_2H_4SCH_3$ | Cl | H | Cl | |
| 434 | $3\text{-}C_2H_4SOCH_3$ | Cl | H | Cl | |
| 435 | $3\text{-}CHCl\text{-}C_2H_5$ | Cl | H | F | |
| 436 | $3\text{-}C_3H_7n$ | Cl | H | Cl | |
| 437 | $3\text{-}C_6H_{13}iso$ | Cl | H | Cl | |
| 438 | $3\text{-}C\equiv CH$ | Cl | H | Cl | |
| 439 | $3\text{-}C\equiv CCH_3$ | Cl | H | Cl | |
| 440 | $3\text{-}CH=CH_2$ | Cl | H | Cl | |
| 441 | $3\text{-}CCl=CH_2$ | Cl | H | Cl | Smp. 68-72° |
| 442 | $3\text{-}CCl=CHCH_3$ | Cl | H | Cl | |
| 443 | $3\text{-}C_2H_4N(CH_3)_2$ | Cl | H | Cl | |
| 444 | 3-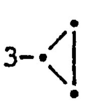 | Cl | H | Cl | |
| 445 | $3\text{-}CH=CH\text{-}C_3H_7n$ | Cl | H | Cl | |
| 446 | 3-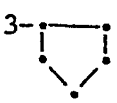 | Cl | H | Cl | |
| 447 | $3\text{-}CH_2COOC_2H_5$ | Cl | H | Cl | |
| 448 | $3\text{-}CH_2CONH_2$ | Br | H | Br | |
| 449 | $2\text{-}CH_3$ | Br | H | Br | |

| No. | $(R)_n$ | $R_1$ | $R_2$ | $R_3$ | phys.Daten |
|---|---|---|---|---|---|
| 450 | 2-F | Cl | H | Cl | |
| 451 | $2\text{-}OCH_2C{=}CH$ | Cl | H | Cl | |
| 452 | $2\text{-}SCH_3$ | Cl | H | Cl | |
| 453 | 2-SH | Cl | H | Cl | |
| 454 | 2-COOH | Cl | H | Cl | |
| 455 | $2\text{-}COOCH_3$ | Cl | H | Cl | |
| 456 | $2\text{-}CH_2OH$ | Br | H | Br | |
| 457 | 2-CHO | Cl | H | Cl | |
| 458 | 3-Cl, 4F | F | H | F | Smp. 101-103° |
| 459 | 3-Cl, 4F | F | H | Cl | |
| 460 | $3,4(CH_3)_2$ | Cl | H | Cl | |
| 461 | $3,5(Cl)_2$ | Cl | H | Cl | Smp. 175-177° |
| 462 | $2,6(Cl)_2$ | Cl | H | Cl | |
| 463 | $2,3(CH_3)_2$ | Cl | H | Cl | |
| 464 | $2,4(CH_3)_2$ | Cl | H | Cl | |
| 465 | 3-Cl, $4\text{-}C_3H_7$iso | Cl | H | Cl | |
| 466 | 2-Cl, $4\text{-}CH_3$ | Cl | H | Cl | |
| 467 | $3,4(Cl)_2$ | Cl | H | Cl | |
| 468 | $3,5(OCH_3)_2$ | Cl | H | Cl | Smp. 168-172° |
| 469 | $3\text{-}NH_2$, $4\text{-}CH_3$ | Cl | H | Cl | |
| 470 | $3\text{-}NHCH_3$, $4\text{-}CH_3$ | Cl | H | Cl | |
| 471 | 3-OH, 5-Cl | Cl | H | Cl | |
| 472 | $3\text{-}OCHF_2$, 5-Cl | Cl | H | Cl | |
| 473 | $3\text{-}OCH_3$, 5-Cl | Cl | H | Cl | |
| 474 | 3-COOH, 5-Cl | Cl | H | Cl | |
| 475 | $3\text{-}COOCH_3$, 5-Cl | Cl | H | Cl | |
| 476 | $3\text{-}CONH_2$, 5-Cl | Cl | H | Cl | |
| 477 | $4\text{-}COCH_3$, $4\text{-}CH_3$ | Cl | H | Cl | |
| 478 | 2-Cl, 6-C≡CH | Br | H | Br | |
| 479 | $4\text{-}SO_2N(CH_3)_2$, $5\text{-}CH_3$ | Br | H | Br | |
| 480 | 3-C≡CH, $5CH_3$ | Cl | H | F | |

| No. | $(R)_n$ | $R_1$ | $R_2$ | $R_3$ | phys.Daten |
|---|---|---|---|---|---|
| 481 | $2-CH_3$, $5-N(CH_3)_2$ | Cl | H | Cl | |
| 482 | $2-CH_3$, 5-Cl | Cl | H | Cl | |
| 483 | 3-Br, $4-OCH_3$ | Cl | H | Cl | |
| 484 | $3-CH_3$, $4-NHCON(CH_3)_2$ | Cl | H | Cl | |
| 485 | 2 $SCH_3$, $5-NO_2$ | Cl | H | Cl | |
| 486 | 2 $SCH_3$, $5-NH_2$ | Cl | H | Cl | |
| 487 | 2 Cl, $5-NO_2$ | Cl | H | Cl | |
| 488 | 2 Cl, $5NH_2$ | Cl | H | Cl | |
| 489 | $3,4(OCH_3)_2$ | Cl | H | Cl | |
| 490 | 3,4 $(OH)_2$ | Cl | H | Cl | |
| 491 | 2,3 • $Cl_2$ | Cl | H | Cl | Smp. 116-118° |
| 492 | 2,5 $(OCH_3)_2$ | Cl | H | Cl | Smp. 127-129° |
| 493 | 2,5 $(OH)_2$ | Cl | H | Br | |
| 494 | $4-CN_3$, $3-CH_3$ | Cl | H | Cl | Smp. 120-123° |
| 495 | 4-OH, $3-CH_3$ | Cl | H | Br | |
| 496 | $4-OCH_3$, $3-NO_2$ | Cl | H | Cl | |
| 497 | 4-OH, $3-NO_2$ | Cl | H | Cl | |
| 498 | $4-OCH_3$, $3-NH_2$ | Cl | H | Cl | |
| 499 | 4-OH, $3-NH_2$ | Cl | H | Cl | |
| 500 | 3,5 $(OH)_2$ | Cl | H | Cl | |
| 501 | 2,6 $Cl_2$, $3-NO_2$ | Cl | H | Cl | |
| 502 | 2,6 $Cl_2$, $3-NH_2$ | Cl | H | Cl | |
| 503 | $2,6(OCH_3)_2$, 4-Cl | Br | H | Br | |
| 504 | $2,6(OH)_2$, 4-Cl | Br | H | Br | |
| 505 | $3,5(J)_2$, $4-OCH_3$ | Cl | H | Cl | |
| 506 | $3,5(J)_2$, 4-OH | Br | H | Br | |
| 507 | $3,5(Cl)_2$, $4-OCH_3$ | Br | H | Br | |
| 508 | $3,5(Cl)_2$, 4-OH | Cl | H | Cl | |
| 509 | $2,5(Cl_2)$, $4-OCH_3$ | Cl | H | Cl | |
| 510 | $2,5(Cl)_2$, 4-OH | Cl | H | Cl | |
| 511 | 4F | Cl | H | Br | |
| 512 | $3,4(OH)_2$ | Br | H | Br | |

| No. | $(R)_n$ | $R_1$ | $R_2$ | $R_3$ | phys. Daten |
|---|---|---|---|---|---|
| 513 | 2,6$(OH)_2$, 3-$NH_2$ | Cl | H | Cl | |
| 514 | 3-$OCH_2OCH_3$ | Cl | H | Cl | |
| 515 | 3,5$(OH)_2$, 4-$OCH_3$ | Cl | H | Cl | |
| 516 | 3,4,5$(OH)_3$ | Cl | H | Cl | |
| 517 | 2,3,4$(OCH_3)_3$ | Cl | H | Cl | |
| 518 | 2,3,4$(OH)_3$ | Cl | H | Cl | |
| 519 | 2,3,5$(Cl)_3$, 4-$OCH_3$ | Cl | H | Cl | |
| 520 | $(CH_3)_5$ | Cl | H | Cl | |
| 521 | H | CN | H | CN | Smp. 150-155° |
| 522 | H | Cl | H | CN | |
| 523 | 4-$CH_3$ | CN | H | CN | |
| 524 | 4-$CH_3$ | Cl | H | CN | |
| 525 | 4-$OCH_3$ | CN | H | CN | |
| 526 | 4-OCH | CN | H | Cl | |
| 527 | 4-OH | CN | H | CN | |
| 528 | 4-OH | Cl | H | CN | Smp. 69-72° |
| 529 | $(H)_5$ | $SCH_3$ | H | Cl | |
| 530 | $(H)_5$ | $SO_2CH_3$ | H | Cl | |
| 531 | $(H)_5$ | $SCH_3$ | H | Br | |
| 532 | $(H)_5$ | $SO_2CH_3$ | H | Br | |
| 533 | $(H)_5$ | $SCH_3$ | H | F | |
| 534 | $(H)_5$ | $SO_2CH_3$ | H | F | |
| 535 | $(H)_5$ | CN | Cl | Cl | |
| 536 | 3-$SCH_2CO_2CH_3$ | Cl | H | Cl | |
| 537 | $(H)_5$ | $OCF_3$ | H | Cl | |
| 538 | 4-$CH_3$ | $OCF_3$ | H | Cl | |
| 539 | 4-$CH_3$ | $OCOCH_3$ | H | Cl | Smp. 110-112° |
| 540 | 4-OH, 3$CH_3$ | Cl | H | Cl | |
| 541 | $(H)_5$ | Cl | F | Cl | |
| 542 | $(H)_5$ | Br | F | Br | |
| 543 | 3-$CH_3$ | Cl | H | Cl | Smp. 76-79° |
| 544 | 3-$SCH_3$ | Cl | H | Cl | Smp. 103-105° |

| No. | $(R)_n$ | $R_1$ | $R_2$ | $R_3$ | phys. Daten |
|---|---|---|---|---|---|
| 545 | 3-$CCl_3$ | Cl | H | Cl | |
| 546 | 4-$CCl_3$ | Cl | H | Cl | |
| 547 | 4-OH, 3-$CH_3$ | Br | H | Cl | Smp. 140-145° |
| 548 | 4-$SCH_2COCH_3$ | Cl | H | Cl | |
| 549 | 3-$SCOCH=CH_2$ | Cl | H | Cl | |
| 550 | 4-$SCOCH=CHCH_3$ | Cl | H | Cl | |
| 551 | 3-$SCO-CH_2C{\equiv}CH$ | Br | H | Br | |
| 552 | 4-$SOCH_2CH=CH_2$ | Cl | H | Cl | |
| 553 | 3-$SOCH_2CH=CH_2$ | Cl | H | Cl | |
| 554 | 4-$SOCH_2C{\equiv}CH$ | F | H | Cl | |
| 555 | 3-$SOCH_2C{\equiv}CH$ | Cl | H | Cl | |
| 556 | 3-$SO_2CH_2CH=CH_2$ | Br | H | Br | |
| 557 | 4-$SO_2CH_2CH=CH_2$ | Cl | H | Cl | |
| 558 | 3-$SO_2CH_2C{\equiv}CH$ | Cl | H | Cl | |
| 559 | 4-$SO_2CH_2C{\equiv}CH$ | Cl | H | Cl | |
| 560 | 4-$OCOC_6H_{13n}$ | Cl | H | Cl | |
| 561 | 3-$OCO-C_5H_{11}i$ | Cl | H | Cl | |
| 562 | 4-$OCONHCH_3$ | Cl | H | Cl | Smp. 205-209° |
| 563 | 3-$OCONHCH_3$ | Cl | H | Cl | Smp. 134-137° |
| 564 | 4-$OCON(CH_3)_2$ | Cl | H | Cl | Smp. 191-193° |
| 565 | 4-$OCONHC_4H_9$ | Cl | H | Cl | |
| 566 | 3-$OCONHC_3H_7i$ | Cl | H | Cl | |
| 567 | 4-$OCOCH=CH_2$ | Cl | H | Cl | |
| 568 | 3-$OCOCH=CH-CH_3$ | Cl | H | Cl | |
| 569 | 4-$OCOCH_2OCH_3$ | Cl | H | Cl | |
| 570 | 3-$OCON(CH_3)_2$ | Cl | H | Cl | |
| 571 | 4-$NHCONHC_4H_9n$ | Cl | H | Cl | |
| 572 | 4-SH | Cl | H | Cl | |
| 573 | 3-$OC_2H_4OH$ | Cl | H | Cl | |
| 574 | 3-$NHC_2H_4COOCH_3$ | Cl | H | Cl | |
| 575 | 3-Br, 4-OH | Cl | H | Cl | |
| 576 | 3-$NHCONHCH_3$ | Cl | H | Cl | Smp. 234-238° |
| 577 | 4-$OCH_3$ | OH | H | OH | Smp. 318° Z |

| No. | (R)$_n$ | $R_1$ | $R_2$ | $R_3$ | |
|---|---|---|---|---|---|
| 577 | 4-Br | Cl | H | $CH_3$ | Smp.143-146° |
| 578 | 4-$CH_3$ | $CH_3$ | H | $CH_3$ | Smp. 138-139° |
| 579 | 4-$CH_3$ | OH | H | OH | Smp. 311° Z |
| 580 | 4-$CH_3$ | OH | H | $SO_3CH_3$ | Smp. 96-99° |
| 581 | 4-$OCH_2CH{=}CH_2$ | OH | H | OH | Smp. 280° Z |
| 582 | 4-F | OH | H | OH | Smp. 330° Z |
| 583 | 3-OH | OH | H | OH | Smp. 320° Z |
| 584 | 4-O- 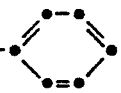 | OH | H | OH | Smp. 250° Z |
| 585 | 3,4-$OCH_2O$- | Cl | H | Cl | Smp. 148-150° |
| 586 | 4-$OC_3H_6O$- 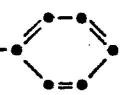 | Cl | H | Cl | Smp. 102-103° |
| 587 | 3-O- 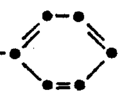 | Cl | H | Cl | Smp. 91-93° |
| 588 | (H)$_5$ | OH | H | $CH_2Cl$ | Smp. 193-195° |
| 589 | -$N(C_2H_4OH)_2$ | Cl | H | Cl | Smp. 169-171° |
| 590 | 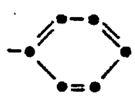 | Cl | H | -$ON{=}C(-CH_3)_2$ | Smp.120-121° |
| 591 | 3-$COCH_3$ | OH | H | OH | Smp. 230° Z |
| 592 | 3,4 $Cl_2$ 5-$P(OCH_3)_2$ | Cl | H | Cl | Smp. 220° Z |
| 593 | -$OCON(CH_3)OCH_3$ | Cl | H | Br | Smp. 170-172° |
| 594 | -N=CH- 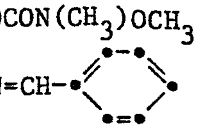 | Cl | H | Cl | Smp. 152-154° |
| 595 | -OCONH- 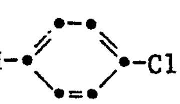 -Cl | Cl | H | Cl | Smp. 195-198° |

Die Verbindungen der Formel I werden im allgemeinen nicht als solche in der Landwirtschaft eingesetzt. Man verwendet gebrauchsfertige formulierte Mittel, in denen die aktiven Verbindungen mit Trägerstoffen, Netzmitteln und anderen in der Formulierungstechnik üblichen Hilfsstoffen vermischt vorliegen, so dass sie entweder direkt oder mit Wasser verdünnt eingesetzt werden können. Die Herstellung wolcher Mittel kann beispielsweise den folgenden Beispielen entnommen werden.

Beispiel 8: Stäubemittel

Zur Herstellung eines a) 5%igen und b) 2%igen Stäubemittels werden die folgenden Stoffe verwendet:

a) 5 Teile 2-para-Tolyl-4,6-bis-isopropyloxy-pyrimidin

95 Teile Talkum,

b) 2 Teile des obigen Wirkstoffes oder einer Mischung,

1 Teil hochdisperse Kieselsäure,

97 Teile Talkum.

Die Wirkstoffe werden mit den Trägerstoffen vermischt und vermahlen und können in dieser Form zur Anwendung verstäubt werden.

Beispiel 9: Granulat

Zur Herstellung eines 5%igen Grnaulates werden die folgenden Stoffe verwendet:

5 Teile 2-para-Tolyl-4,6-bis-isopropoxy-5-brom-pyrimidin

0,25 Teile epoxidiertes Pflanzenöl,

0,25 Teile Cetylpolyglykoläther,

3,50 Teile Polyäthylenglykol,

91 Teile Kaolin (Korngrösse 0,3-0,8 mm).

Die Aktivsubstanz oder die Mischung wird mit dem Pflanzenöl vermischt und mit 6 Teilen Aceton gelöst, hierauf wird Polyäthylenglykol und Cetylpolyglykoläther zugesetzt. Die so erhaltene Lösung wird auf Kaolin aufgesprüht, und anschliessend wird das Aceton im Vakuum verdampft. Ein derartiges Mikrogranulat lässt sich vorteilhaft in Saatfurchen einarbeiten.

Beispiel 10: Spritzpulver

Zur Herstellung eines a) 70%igen, b) 40%igen, c) und d) 25%igen, e) 10%igen Spritzpulvers werden folgende Bestandteile verwendet:

a) 70 Teile 2-para-Tolyl-4,6-bis-(methoxyäthyl)-5-chlorpyrimidin
5 Teile Natriumdibutylnaphthylsulfonat,
3 Teile Naphthalinsulfonsäuren-Phenolsulfonsäuren-Formaldehyd-Kondensat 3:2:1,
10 Teile Kaolin,
12 Teile Champagne-Kreide;

b) 40 Teile Wirkstoff
5 Teile Ligninsulfonsäure-Natriumsalz,
1 Teil Dibutylnaphthalinsulfonsäure-Natriumsalz,
54 Teile Kieselsäure;

c) 25 Teile Wirkstoff
4,5 Teile Calcium-Ligninsulfonat,
1,9 Teile Champagne-Kreide/Hydrixyäthylcellulose-Gemisch (1:1),
1,5 Teile Natrium-dibutyl-naphthalinsulfonat,
19,5 Teile Kieselsäure,
19,5 Teile Champagne-Kreide,
28,1 Teile Kaolin;

d) 25 Teile Wirkstoff
2,5 Teile Isooctylphenoxy-polyoxyäthylenäthanol,

1,7 Teile Champagne-Kreide/Hydroxyäthylcellulose-Gemisch (1:1),
8,3 Teile Natriumaluminiumsilkat,
16,5 Teile Kieselgur,
46 Teile Kaolin;

e) 10 Teile Wirkstoff oder Mischung,
3 Teile Gemisch der Natriumsalze von gesättigten Fettalkoholsulfaten,
5 Teile Naphthalinsulfonsäure/Formaldehyd-Kondensat,
82 Teile Kaolin.

Die Wirkstoffe werden in geeigneten Mischern mit den Zuschlagstoffen innig vermischt und auf entsprechenden Mühlen und Walzen vermahlen. Man erhält Spritzpulver von vorzüglicher Benetzbarkeit und Schwebefähigkeit, die sich mit Wasser zu Suspensionen der gewünschten Konzentration verdünnen und insbesondere zur Blattapplikation (zwecks Wuchsverzögerung [illegible] ) verwenden lassen.

Beispiel 11: Emulgierbare Konzentrate

Zur Herstellung eines 25%igen emulgierbaren Konzentrates werden folgende Stoffe verwendet:

25 Teile 2-Phenyl-4-chlor-6-methyl-pyrimidin
10 Teile eines Alkylarylsulfonat/Fettalkoholpolyglykoläther-Gemisches,
5 Teile Dimethylformamid,
57,5 Teile Xylol.

Beispiel 12: Paste

Zur Herstellung einer 45%igen Paste werden folgende Stoffe verwendet:

a) 45 Teile 2-Phenyl-4-chlor-6-hydroxy-pyrimidin oder einer Mischung davon mit 2-Chlor-2',6'-diäthyl-N-(methoxymethyl)-acetanilid,

5 Teile Natriumaluminiumsilkat,
14 Teile Cetylpolyäthylenglykoläther mit 8 Mol Aethylenoxid,
1 Teil Oleylpolyäthylenglykoläther mit 5 Mol Aethylenoxid,
2 Teile Spindelöl,
23 Teile Wasser,
10 Teile Polyäthylenglykol;

b) 45 Teile des obigen Wirkstoffes oder der Mischung,
5 Teile Aethylenglykol,
3 Teile Octylphenoxypolyäthylenglykol mit 9-10 Mol Aethylenoxid pro Mol Octylphenol,
3 Teile von einem Gemisch aromatischer Sulfonsulfosäuren, kondensiert mit Formaldehyd als Ammoniumsalz,
1 Teil Siliconöl in Form einer 75%igen Emulsion,
0,1 Teile einer Mischung von 1-(3-Chlorallyl)-3m5m7-triazo-azonium-adamantan-chlorid mit Natriumcarbonat, Chloridwert mind. 11,5%,
0,2 Teile eines biopolymeren Verdickers mit max. 100 Keimen pro Gramm,
42,7 Teile Wasser.

Die Aktivsubstanz wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

Biologische Beispiele:

Die Fähigkeit der 2-Phenylpyrimidine das Pflanzenwachstum zu regulieren, respektive den Pflanzenmetabolismus zu beeinflussen kann aus den folgenden Beispielen ersehen werden.

Beispiel 13:

Wuchshemmung Solanum und Avena

In Kunststofftöpfen mit sterilisierter Erde werden die Pflanzen Solanum (Tomate) und Avena sativa (Kulturhafer) angesät und im Gewächshaus angezogen. Bewässerung, Temperaturregelung und Beleuchtung erfolgte nach Bedarf. Zwei Wochen nach Ansaat erfolgte die Applikation mit 4 kg Wirkstoff pro Hektar mit einer Brühe welche durch Verdünnen eines 25%igen Emulsionskonzentrates mit einer Wassermenge von 500 Liter/ha erhältlich wurden. Zwei Wochen nach der Applikation wird das Pflanzenwachstum beurteilt. Die Wuchshöhe wird gemessen und in % zur Kontrolle ausgedrückt (K = 100%). Die folgenden Nebenwirkungen werden bestimmt:

X = leichte Nekrose
Y = starke Nekrose
L = leichte Chlorose
C = starke Chlorose
B = Blattdeformation

Die Resultate sind wie folgt:

| Verbindung No. | Solanum % Wuchshöhe | Solanum Nebenwirkung | Avena % Wuchshöhe | Avena Nebenwirkung |
|---|---|---|---|---|
| 13 | 0 | Y | 100 | - |
| 14 | 65 | L X | 100 | - |
| 15 | 40 | L X | 100 | - |
| 41 | 40 | L X | 100 | - |
| 53 | 100 | - | 75 | X |
| 54 | 100 | - | 75 | X |
| 67 | 15 | L B | 100 | - |
| 70 | 65 | L X B | 100 | - |
| 441 | 65 | B X | 100 | - |
| 529 | 65 | C | 100 | - |
| 557 | 50 | - | 100 | - |
| 578 | 0 | Y | 100 | - |
| 579 | 75 | X | 100 | - |
| 581 | 15 | L X B | 85 | - |
| 586 | 40 | B Y | 100 | - |
| 592 | 65 | - | 100 | - |

Beispiel 14:

Wurzelwachstum (30 Tage-Versuch)

Zur Untersuchung des Wurzelwachstums erfolgte die Kultur in mit Erde gefüllten Kisten (60 x 40 x 80 cm) für Saatbehandlungen und in mit Erde gefüllten Röhren (10 x 100 cm) für Post-Applikationen.

Die Produkte werden als Saatbeizungen (45-500 mg pro kg Samen) oder direkt nach der Saat als Bodenbehandlungen (0.1-1.0 kg/ha) oder 2 Wochen nach Ansaat als Post-Applikation (0.3-3.0 kg/ha) als verdünnte wässrige Emulsion appliziert.

Für die Kultur werden die Gefässe in Klimakammern unter kontrollierten Bedingungen gehalten.

Die Bewertung der Wurzeln erfolgt 30 Tage nach Applikation, nachdem die Erde vorsichtig ausgewaschen wurde.

Wurzellänge und Wurzelgewicht werden bestimmt und in % zur unbehandelten Kontrolle ausgedrückt ( = 100%).

Die Resultate sind wie folgt:

| Verbindung No. | Kultur | Applikation | Wurzellänge % | Wurzelgewicht % |
|---|---|---|---|---|
| 1 | Weizen | Saatbeizung mg/kg Saat | | |
| | | 45 | 103 | 106 |
| | | 150 | 106 | 97 |
| | | 500 | 106 | 111 |
| 1 | Soja | 45 | 97 | 123 |
| | | 150 | 102 | 110 |
| | | 500 | 95 | 95 |
| 1 | Weizen | Post-Applikation kg/ha | | |
| | | 0,1 | 108 | 117 |
| | | 0,3 | 91 | 117 |
| | | 1,0 | 99 | 91 |
| 200 | Weizen | 0,3 | 120 | 112 |
| | | 1,0 | 110 | 116 |
| | | 3,0 | 110 | 120 |
| | | Bodenbehandlung kg/ha | | |
| 200 | Baumwolle | 0,1 | 113 | 115 |
| | | 0,3 | 111 | 115 |
| | | 1,0 | 105 | 104 |
| | Weizen | 0,1 | 101 | 117 |
| | | 0,3 | 98 | 116 |
| | | 1,0 | 98 | 119 |

Beispiel 15:

Wurzelwachstum (10-Tage Versuch)

Zur Untersuchung des Wurzelwachstums erfolgt die Kultur in mit Erde gefüllten Plastikzylindern ( 5 x 30 cm).
Die Produkte werden als Saatbeizung (13-150 mg/kg Samen) oder direkt nach der Saat als Bodenbehandlung (soil drench) (0.1-10 kg/ha) als verdünnte wässrige Emulsionen appliziert.
Nach der Ansaat (10 Samen/Zylinder) werden die Zylinder in Klimakammern unter kontrollierten Bedingungen gehalten.
Die Bewertung der Wurzeln erfolgt 10 Tage nach Ansaat nachdem die Erde vorsichtig ausgewaschen wurde.
Gemessen werden die Wurzellänge und das Wurzeltrockengewicht. Der Ausdruck der Resultate erfolgt in % zur unbehandelten Kontrolle (= 100%).

Die Ergebnisse sind wie folgt:

| Verbindung No. | Kultur | Applikation | Wurzellänge % | Wurzelgewicht % |
|---|---|---|---|---|
| | | Samenbeizung mg/kg Saat | | |
| 1 | Weizen | 13 | 105 | 118 |
| | | 45 | 101 | 118 |
| | | 150 | 106 | 126 |
| 2 | Weizen | 13 | 101 | 90 |
| | | 45 | 103 | 105 |
| | | 150 | 114 | 95 |
| 18 | Weizen | 13 | 95 | 110 |
| | | 45 | 96 | 110 |
| | | 150 | 91 | 98 |
| 31 | Weizen | 13 | 111 | 100 |
| | | 45 | 106 | 86 |
| | | 150 | 109 | 93 |
| | | Bodenbehandlung kg/ha | | |
| 200 | Baumwolle | 0,1 | 113 | 115 |
| | | 0,3 | 111 | 115 |
| | | 1,0 | 105 | 104 |

Patentansprüche:

1. Verfahren zur Regulierung des Pflanzenwachstums, dadurch gekennzeichnet, dass man die Pflanzen, deren Samen oder Anbaufläche mit einer wirksamen Menge eines Phenylpyrimidins der Formel I behandelt

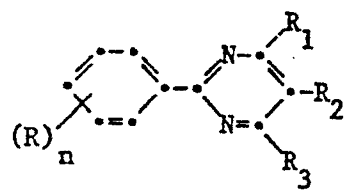

(I),

worin

n eine Zahl von 1 bis 5,

R Wasserstoff, Halogen, Nitro, Cyan, $-XR_5$, $-NR_6R_7$, -CO-A, $-CS-NR_6R_7$, $-SO_2-NR_6R_7$, $C(OR_4)_2-R_4$, 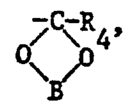 $-PO(OR_4)_2$, $-SO_3H$, $-N=CR_8R_9$, eine unsubstituierte oder durch Halogen, $-XR_5$, $-NR_6R_7$. $-PO(OR_4)_2$, -CO-A oder Cyan substituierte $C_1$-$C_6$-Alkyl- oder $C_3$-$C_6$-Cycloalkylgruppe oder eine unsubstituierte oder durch Halogen oder $-XR_4$ substituierte $C_2$-$C_6$-Alkenyl-, $C_3$-$C_6$-Cycloalkyl- oder $C_3$-$C_6$-Alkinylgruppe,

$R_1$ und $R_3$ unabhängig voneinander je Wasserstoff, Halogen, $C_1$-$C_6$-Alkyl, Cyan, -CO-A, $-NR_6R_7$, $-XR_5$ oder unsubstituiertes oder durch Halogen, $C_1$-$C_4$-Alkyl, Nitro oder $-XR_5$ substituiertes Phenyl,

$R_2$ Wasserstoff, Halogen, unsubstituiertes oder durch Halogen, $C_1$-$C_4$-Alkyl, Trifluormethyl, Nitro oder $-XR_5$ substituiertes Phenyl oder eine unsubstituierte oder durch Halogen oder $-XR_5$ substituierte $C_1$-$C_6$-Alkyl-, $C_3$-$C_6$-Cycloalkyl-, $C_2$-$C_6$-Alkenyl- oder $C_2$-$C_6$-Alkinylgruppe,

$R_4$ Wasserstoff, eine unsubstituierte oder durch Halogen, -CO-A, Hydroxy, $C_1$-$C_6$-Alkoxy oder $-NR_6R_7$ substituierte $C_1$-$C_6$-Alkyl- oder $C_3$-$C_6$-Alkenyl- oder $C_2$-$C_6$-Alkinylgruppe,

$R_5$ dasselbe wie $R_4$, ausserdem $C_1$-$C_6$-Alkylcarbonyl, $C_3$-$C_6$-Alkenylcarbonyl, $C_3$-$C_6$-Alkinylcarbonyl,

$R_6$ und $R_7$ unabhängig voneinander je Wasserstoff, $C_2$-$C_6$-Alkenyl, $C_2$-$C_6$-Alkinyl oder unsubstituiertes oder durch -CO-A substituiertes $C_1$-$C_6$ Alkyl, oder einer der Reste $R_6$ und $R_7$ bedeutet eine Gruppe -COA oder $-OR_4$ oder

$R_6$ und $R_7$ zusammen eine 4- bis 6-gliedrige Alkylenkette, die durch Sauerstoff, Schwefel, eine Imino- oder $C_1$-$C_4$-Alkylaminogruppe unterbrochen sein kann,

B eine verzweigte oder unverzweigte $C_1$-$C_6$-Alkylenkette und

X Sauerstoff, Schwefel, -SO- oder $-SO_2-$ bedeuten,

A die gleiche Bedeutung wie $R_4$ hat oder für $-OR_4$ oder $-NR_6R_7$ steht,

$R_8$ unsubstituiertes oder durch $C_1$-$C_6$-Alkoxy substituiertes Alkyl,

$R_9$ Wasserstoff oder dasselbe wie $R_8$ oder

$R_8$ und $R_9$ zusammen eine 4-5-gliedrige Alkylenkette bedeuten.

2. Verfahren gemäss Anspruch 1 dadurch gekennzeichnet, dass man die Pflanzen, deren Samen oder Anbaufläche mit einer wirksamen Menge eines Phenylpyrimidines der Formel I behandelt, worin

n eine Zahl von 1 bis 3,

R Wasserstoff, Halogen, Nitro, Cyan, $C_1$-$C_4$-Alkyl, $C_1$-$C_4$-Halogenalkyl, $C_1$-$C_4$-Cyanoalkyl, Hydroxy , $(C_1$-$C_4$-Alkoxy$)_n$, $C_1$-$C_4$-Halogenalkoxy $C_2$-$C_8$-Halogenalkoxyalkyl, $C_2$-$C_4$-Alkenyl, $C_2$-$C_4$-Halogenalkenyl, $C_2$-$C_4$-Alkenyloxy, $C_2$-$C_4$-Alkinyl, Sulfhydryl, $C_1$-$C_4$-Alkylthio, Carboxyl, $C_1$-$C_4$-Alkylcarbonyl, $C_1$-$C_4$-Alkoxycarbonyl, $C_2$-$C_4$-Alkenylcarbonyl, $C_2$-$C_4$-Alkinylcarbonyl, $C_1$-$C_4$-Alkylcarbonyl-$C_1$-$C_4$-alkyl, $C_1$-$C_4$-Alkylcarbonyloxy, $C_1$-$C_4$-Alkylaminocarbonyl, $C_1$-$C_4$-Dialkylaminocarbonyl, Amino, $C_1$-$C_4$-Alkylamino, $C_1$-$C_4$-Dialkylamino, Acetylamino, Chloracetylamino, Methylureido, Dimethylureido, Sulfonyl, $C_1$-$C_4$-Alkylsulfonyl, Sulfamoyl, $C_1$-$C_4$-Alkylsulfamoyl, $C_1$-$C_4$-Dialkylsulfamoyl, $C_1$-$C_4$-Alkoxycarbonylsulfamoyl, $C_1$-$C_4$-Dialkoxyphosphonylmethyl

$R_1$ und $R_3$ unabhängig voneinander je Wasserstoff, Halogen, $C_1$-$C_6$-Alkyl,

Cyan, Hydroxy, $C_1$-$C_6$-Alkoxy, $C_2$-$C_8$-Alkoxyalkyl, Phenyl, Phenoxy, $C_1$-$C_4$-Alkoxycarbonyloxy, Amino, $C_1$-$C_4$-Alkylamino, $C_1$-$C_4$-Dialkylamino, Morpholino, Sulfhydryl und

$R_3$ Wasserstoff, Halogen, $C_1$-$C_6$-Alkyl, $C_1$-$C_6$-Halogenalkyl oder Phenyl bedeuten.

3. Verfahren gemäss Anspruch 1, dadurch gekennzeichnet, dass man die Pflanzen, deren Samen oder Anbaufläche mit einer wirksamen Menge eines Phenylpyrimidins der Formel Ia behandelt,

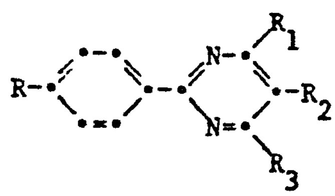

(Ia)

worin R Wasserstoff oder Methyl

$R_1$ Wasserstoff, Halogen, $C_1$-$C_6$-Alkyl, Hydroxy, $C_1$-$C_6$-Alkoxy, $C_2$-$C_8$-Alkoxyalkyl, Phenyl, Phenoxy, $C_1$-$C_4$-Alkoxycarbonyloxy, Amino, $C_1$-$C_4$-Alkylamino, $C_1$-$C_4$-Dialkylamino, Morpholino oder Sulfhydryl,

$R_2$ Wasserstoff, Halogen, $C_1$-$C_6$-Alkyl oder Phenyl,

$R_3$ Halogen, Hydroxy, $C_1$-$C_6$-Alkoxy, $C_2$-$C_8$-Alkoxyalkyl, Phenoxy oder Sulfhydryl bedeuten.

4. Verfahren gemäss Anspruch 1, dadurch gekennzeichnet, dass man die Pflanzen, deren Samen oder Anbaufläche mit einer wirksamen Menge eines Phenylpyrimidins der Formel Ib behandelt

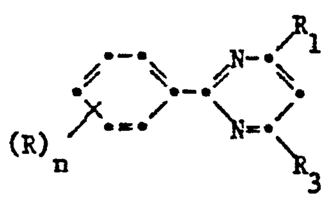

(Ib)

worin n, R, $R_1$ und $R_3$ die im Anspruch 1 gegebene Bedeutung haben.

5. Verfahren gemäss Anspruch 1, dadurch gekennzeichnet, dass man die Pflanzen, deren Samen oder Anbaufläche mit einer wirksamen Menge 2-Phenyl-4,6-dichlorpyrimidins behandelt.

6. Verfahren gemäss Anspruch 1, dadurch gekennzeichnet, dass man die Pflanzen, deren Samen oder Anbaufläche mit einer wirksamen Menge 2-(4-Methoxycarbonylamidophenyl)-4,6-dichloropyrimidin behandelt.

7. Verfahren gemäss Anspruch 1 zur Wuchshemmung im Sinne einer Erhöhung der Knickfestigkeit und Halmverkürzung bei den Getreidesorten Hafer, Weizen, Gerste oder Roggen.

8. Verfahren gemäss Anspruch 1 zur Wuchshemmung bei Gräsern und Unkräutern.

9. Verfahren gemäss Anspruch 1 zur Wuchsregulierung bei Soja im Sinne einer Ertragssteigerung.

10. Verfahren gemäss Anspruch 1 zur Wuchshemmung von Bodenbedeckerpflanzen.

11. Verfahren gemäss Anspruch 1 zur Wuchsregulierung von Baumwollpflanzen im Sinne einer Ertragssteigerung.

12. Verfahren gemäss Anspruch 1 zur Wuchsregulierung bei Getreidepflanzen im Sinne einer Ertragssteigerung.

13. Verfahren gemäss Anspruch 1 zur Stimulierung des Wurzelwachstums von keimenden Nutzpflanzen.

14. Die Verwendung der Phenylpyrimidine der Formel I zur Regulierung des Pflanzenwachstums, dadurch gekennzeichnet, dass man eine gemäss Anspruch 1 definierte Verbindung in einer wirksamen Menge auf die Samen, die Pflanze oder deren Standort appliziert.

FO 7.5 NU/rn*/cw*